# EUROPEAN PATENT APPLICATION

(11) **EP 4 485 006 A1**
(43) Date of publication of application: **01.01.2025**
(21) Application number: 22934374.4
(22) Date of filing: 02.04.2022
(51) Int. Cl.: G01S 17/06

(54) **SCANNING SYSTEM AND METHOD**

(71) Applicant: Shenzhen Yinwang Intelligent Technologies Co., Ltd., Shenzhen, Guangdong 518129 (CN)
(72) Inventor: HSU, Yun Chiang, Shenzhen, Guangdong 518129 (CN); YANG, Chuan, Shenzhen, Guangdong 518129 (CN); CHEN, Shi, Shenzhen, Guangdong 518129 (CN); ZHOU, Yong, Shenzhen, Guangdong 518129 (CN); CHEN, Hongfu, Shenzhen, Guangdong 518129 (CN); GAO, Shuaiwen, Shenzhen, Guangdong 518129 (CN)
(74) Representative: Maiwald GmbH
(86) International application number: PCT/CN2022/085133
(87) International publication number: WO 2023/184547

(57) **Abstract**

A scanning system is disclosed. The scanning system includes at least one light source (21), a first scanning apparatus (23), and at least one control apparatus (22). The at least one light source (21) is configured to emit a light beam. The at least one control apparatus (22) is configured to control the first scanning apparatus (23) to swing within a swing angle range, so that the first scanning apparatus (23) reflects the light beam emitted by the at least one light source (21). The at least one control apparatus (22) can adjust a location of an ROI of the scanning system by adjusting a swing manner of the first scanning apparatus (23). This improves an ROI function of a lidar (100) and implements flexible configuration of the ROI. In addition, a scanning manner, a processing apparatus, a computer-readable storage medium, a computer program product, and a terminal device are further provided.

## Description

### TECHNICAL FIELD

This application relates to the field of lidar technologies, and in particular, to a scanning system and method.

### BACKGROUND

As a sensing detection system, a lidar can detect an object contour at high precision and obtain depth information of an object both in daytime and at night. Compared with conventional technologies such as a millimeter-wave radar and an ultrasonic radar, the lidar has a shorter operating band, and therefore performance such as a detection resolution and a detection distance can be greatly improved, which makes the lidar become an indispensable technology in each field. A lidar with a region of interest (Region of Interest, ROI) function will have a great advantage in the current market demand application.

However, a lidar in the conventional technology cannot adapt to the ROI function, for example, cannot flexibly change a location of an ROI.

### SUMMARY

Embodiments of this application provide a scanning system and method, to improve an ROI function of a lidar, and implement flexible configuration of an ROI, for example, flexibly changing a location of the ROI.

According to a first aspect, a scanning system is provided, including at least one light source, configured to emit a light beam; a first scanning apparatus, configured to reflect the light beam emitted by the at least one light source; and at least one control apparatus, configured to control the first scanning apparatus to swing within a swing angle range.

In this technical solution, swing of the first scanning apparatus can drive the light beam to scan a field of view region. When the light beam may form an ROI in the field of view region, the at least one control apparatus may adjust a location of the ROI of the scanning system by controlling the swing angle range of the first scanning apparatus, so as to meet requirements for improving an ROI function and flexibly configuring the ROI.

In a possible design, the at least one control apparatus is further configured to control the first scanning apparatus to swing in a first swing manner of a plurality of swing manners, where in the plurality of swing manners, one or more of swing start locations, swing center points, or swing angle ranges of different swing manners are different.

In this way, the location of the ROI region can be controlled by controlling the first scanning apparatus to swing in different swing manners.

In a possible design, the at least one light source is a plurality of light sources; and an included angle between a light beam emitted by a first light source of the at least one light source to a field of view region of the scanning system and a light beam emitted by a second light source of the at least one light source to the field of view region of the scanning system is α, where α>0.

Because there is an included angle between light beams emitted by different light sources to the field of view region, when the first scanning apparatus drives the emitted light beam for scanning, some locations in the field of view region may be repeatedly scanned by light beams emitted by different light sources, to form the ROI. This improves detection performance.

In a possible design, when controlling the first scanning apparatus to swing in the first swing manner, the at least one control apparatus is specifically configured to control the first scanning apparatus to rotate N times from a first angle to a second angle, where N is a positive integer, the first scanning apparatus rotates by an angle of β each time, and β>0; and α>β.

In this way, it can be better ensured that some locations in the field of view region can be scanned by light beams emitted by different light sources, to form the ROI. This improves detection performance.

In a possible design, in the first swing manner, a scanning region corresponding to the light beam from the at least one light source is a first region.

It may be understood that the first region is a final scanning region (namely, a region where the emitted light beam incident to the field of view finally arrives), and a specific location of the first region is related to a scanning manner of the first scanning apparatus, and is further related to an optical system (for example, optical elements like various possible reflectors, lenses, or other scanning apparatuses) before or after the first scanning apparatus.

In a possible design, the plurality of swing manners further include a second swing manner; and in the second swing manner, the scanning region corresponding to the light beam from the at least one light source is a second region, and light spot energy distribution corresponding to the first region is different from light spot energy distribution corresponding to the second region. That light spot energy distribution corresponding to the first region is different from light spot energy distribution corresponding to the second region may be understood as that a distribution location of an ROI (or a high-resolution region) in the first region in the field of view region is different from a distribution location of an ROI (or a high-resolution region) in the second region in the field of view region.

In this way, adjusting the distribution location of the ROI can be adjusted by adjusting the swing manner of the first scanning apparatus.

In a possible design, the at least one light source is a plurality of light sources; and the at least one control apparatus is further configured to: when controlling the first scanning apparatus to swing in the second swing manner, turn off some light sources in the plurality of light sources.

In this way, interference of mixed light can be avoided, and energy of the light source can be saved.

In a possible design, a swing angle range corresponding to the first swing manner is different from a swing angle range corresponding to the second swing manner, and a difference between the swing angle range corresponding to the first swing manner and the swing angle range corresponding to the second swing manner is less than or equal to 90 degrees.

In this design manner, each swing angle range of the first scanning apparatus can be within a reasonable range, to ensure an effective reflectivity of the first scanning apparatus for the light beam.

In a possible design, the at least one control apparatus is further configured to: control the first scanning apparatus to swing periodically in the first swing manner; and after the first scanning apparatus swings in the first swing manner for at least one periodicity, control the first scanning apparatus to switch to swing in the second swing manner.

In this way, the first scanning apparatus can complete switching between the scanning manners in a swing retrace process, and switching consumes a short time. This better ensures scanning efficiency of the scanning system.

In a possible design, the first scanning apparatus is a one-dimensional galvanometer.

In this way, design costs can be reduced.

In a possible design, the scanning system further includes a second scanning apparatus, configured to reflect the light beam emitted by the at least one light source. The at least one control apparatus is further configured to control the second scanning apparatus to rotate within a rotation range.

In this design manner, the scanning system can scan the field of view region in two directions. For example, the first scanning apparatus drives the light beam to scan in one direction, and the second scanning apparatus drives the light beam to scan in another direction.

In a possible design, the first scanning apparatus swings in a first direction, and the second scanning apparatus rotates in a second direction, where the first direction is different from the second direction. Optionally, the second direction is perpendicular to the first direction. For example, the first direction is a transverse field of view direction, and the second direction is a longitudinal field of view direction; or the second direction is a transverse field of view direction, and the first direction is a longitudinal field of view direction.

In this way, two-dimensional scanning of the scanning system in the first direction and the second direction can be implemented.

In a possible design, the at least one control apparatus is further configured to control the second scanning apparatus to rotate within a rotation range of the at least one rotation range; and when the second scanning apparatus rotates within a first rotation range of the at least one rotation range, the at least one control apparatus is further configured to control the second scanning apparatus to rotate at a first rotation speed corresponding to the first rotation range.

In this way, a scanning speed of the light beam in the second direction can be controlled by controlling a rotation speed of the second scanning apparatus, so as to control a resolution of the system in the second direction.

In a possible design, based on the first rotation speed, the scanning region corresponding to the light beam from the at least one light source is a third region.

It may be understood that the third region is a final scanning region (namely, a region where the emitted light beam incident to the field of view finally arrives), and a specific location of the third region is related to a scanning manner of the second scanning apparatus, and is further related to an optical system (for example, various possible reflectors, lenses, or other scanning apparatuses) before or after the second scanning apparatus.

In a possible design, when the second scanning apparatus rotates within a second rotation range of the at least one rotation range, the at least one control apparatus is further configured to control the second scanning apparatus to rotate at a second rotation speed corresponding to the second rotation range, where the first rotation speed is different from the second rotation speed.

In this way, the system can perform scanning in the second direction at different speeds.

In a possible design, based on the second rotation speed, the scanning region corresponding to the light beam from the at least one light source is a fourth region. Light spot energy distribution in the third region is different from that in the fourth region. Correspondingly, a resolution of point cloud data detected by the system in the third region is different from a resolution of point cloud data detected by the system in the fourth region.

In this way, an ROI can be formed in the second direction. Further, a location of the ROI in the second direction can be adjusted by adjusting the rotation speed (or the rotation range) of the second scanning apparatus. In addition, with reference to the foregoing scanning solution of the first scanning apparatus, two-dimensional location adjustment of the ROI (that is, locations of the ROI in the first direction and the ROI in the second direction are both adjusted) can be implemented.

In a possible design, a ratio of the second rotation speed to the first rotation speed is x, and 1<x≤1000.

In this way, it can be ensured that a high-resolution region in the second direction is obviously different from a low-resolution region in the second direction.

In a possible design, a proportion of the third region in the field of view region of the scanning system is γ, and 0.01≤γ<1.

This can avoid a decrease in system scanning efficiency due to the ROI occupying an excessively large proportion in an entire field of view region, and can further avoid a decrease in target recognition accuracy of the system due to the ROI occupying an excessively small proportion in the entire field of view region.

In a possible design, a deviation between a center of the third region and a center of the field of view region of the scanning system is θ, and 0≤θ≤90°.

This can avoid a case in which the system performs high-resolution scanning on an unnecessary region due to an excessively large location adjustment range of the ROI, and can further avoid a case in which an applicable scenario of the solution is limited due to an excessively small adjustment range of the ROI.

In a possible design, the second scanning apparatus is a multi-facet rotation mirror, the multi-facet rotation mirror has F reflective surfaces, and F is a positive integer greater than 1; the multi-facet rotation mirror is configured to rotate around a rotation shaft; and when the multi-facet rotation mirror rotates within a rotation range of the at least one rotation range, the light beam from the at least one light source is reflected by one of the F reflective surfaces. Further, each of the F reflective surfaces may correspond to at least one rotation range. In other words, effect of reflecting the light beam on all reflective surfaces of the multi-facet rotation mirror may be the same.

In this way, design costs can be reduced, and complexity of back-end algorithm processing of the scanning system can be reduced.

In a possible design, the at least one control apparatus is further configured to: control the first scanning apparatus to rotate once each time the second scanning apparatus rotates by the at least one rotation range; or control the second scanning apparatus to rotate by a preset angle each time the first scanning apparatus swings by the swing angle range, where the preset angle is equal to a transverse angular resolution of the scanning system.

Certainly, in addition to the foregoing two cooperation manners, the second scanning apparatus and the first scanning apparatus may further perform two-dimensional scanning in another cooperation manner. This is not limited in this application.

In a possible design, the at least one control apparatus is further configured to: based on historical point cloud data obtained by the scanning system and/or information obtained by another sensor, control the first scanning apparatus to swing in the first swing manner in a first time period and/or control the second scanning apparatus to rotate at the first rotation speed in a second time period.

In this way, the location of the ROI in the field of view can be flexibly and precisely adjusted.

In a possible design, the system includes at least one transmitting optical system, and at least two transmitting optical paths in the system share a same transmitting optical system. The system further includes at least one receiving optical system, and at least two receiving optical paths in the system share a same receiving optical system.

In this way, it can be ensured that light beams from different light sources can overlap in the scanning region, thereby ensuring that the high-resolution region can be formed in the first direction.

In a possible design, the at least one transmitting optical system and the at least one receiving optical system are in an architecture of a same axis.

For example, the transmitting optical path and the receiving optical path may share a same surface of a same scanning component (for example, the first scanning apparatus and the second scanning apparatus).

In a possible design, the at least one transmitting optical system and the at least one receiving optical system are in an architecture of different axes.

For example, the transmitting optical path and the receiving optical path may use different scanning components or different surfaces of a same scanning component. Specifically, for example, the system further includes a third scanning apparatus, where the third scanning apparatus is synchronized with the first scanning apparatus, and the third scanning apparatus is configured to reflect a light beam returned from the field of view.

According to a second aspect, a scanning method is provided, including: controlling a first scanning apparatus to swing in a first swing manner of a plurality of swing manners, to reflect a light beam emitted by at least one light source; and controlling the first scanning apparatus to swing in a second swing manner in of the plurality of swing manners, to reflect the light beam emitted by the at least one light source, where in the plurality of swing manners, one or more of swing start locations, swing center points, or swing angle ranges of different swing manners are different.

In a possible design, in the plurality of swing manners, one or more of swing start locations, swing center points, or swing angle ranges of different swing manners are different.

In a possible design, the at least one light source is a plurality of light sources; and an included angle between a light beam emitted by a first light source of the at least one light source to a field of view region of the scanning system and a light beam emitted by a second light source of the at least one light source to the field of view region of the scanning system is α, where α>0.

In a possible design, the controlling the first scanning apparatus to swing in a first swing manner of a plurality of swing manners includes: controlling the first scanning apparatus to rotate N times from a first angle to a second angle, where N is a positive integer, the first scanning apparatus rotates by an angle of β each time, and β>0; and α>β.

In a possible design, in the first swing manner, a scanning region corresponding to the light beam from the at least one light source is a first region.

In a possible design, in the second swing manner, the scanning region corresponding to the light beam from the at least one light source is a second region, and light spot energy distribution corresponding to the first region is different from light spot energy distribution corresponding to the second region.

In a possible design, the at least one light source is a plurality of light sources, and the method further includes: when controlling the first scanning apparatus to swing in the second swing manner, turning off some light sources in the plurality of light sources.

In a possible design, a swing angle range corresponding to the first swing manner is different from a swing angle range corresponding to the second swing manner, and a difference between the swing angle range corresponding to the first swing manner and the swing angle range corresponding to the second swing manner is less than or equal to 90 degrees.

In a possible design, the method further includes: controlling the first scanning apparatus to swing periodically in the first swing manner; and after the first scanning apparatus swings in the first swing manner for at least one periodicity, controlling the first scanning apparatus to switch to swing in the second swing manner.

In a possible design, the first scanning apparatus is a one-dimensional galvanometer.

In a possible design, the method further includes: controlling a second scanning apparatus to rotate within a rotation range, to reflect the light beam emitted by the at least one light source.

In a possible design, the controlling a second scanning apparatus to rotate within a rotation range includes: when the second scanning apparatus rotates within a first rotation range of the at least one rotation range, controlling the second scanning apparatus to rotate at a first rotation speed corresponding to the first rotation range; and when the second scanning apparatus rotates within a second rotation range of the at least one rotation range, controlling the second scanning apparatus to rotate at a second rotation speed corresponding to the second rotation range, where the first rotation speed is different from the second rotation speed.

In a possible design, the method further includes: controlling the second scanning apparatus to rotate within a rotation range, so that the second scanning apparatus reflects the light beam emitted by the at least one light source.

In a possible design, the method further includes: controlling the first scanning apparatus to swing in a first direction, and controlling the second scanning apparatus to rotate in a second direction, where the second direction is perpendicular to the first direction.

In a possible design, the first direction is a transverse field of view direction, and the second direction is a longitudinal field of view direction; or the second direction is a transverse field of view direction, and the first direction is a longitudinal field of view direction.

In a possible design, the controlling the second scanning apparatus to rotate within a rotation range includes: controlling the second scanning apparatus to rotate within a rotation range of at least one rotation range. The method further includes: when the second scanning apparatus rotates within a first rotation range of the at least one rotation range, controlling the second scanning apparatus to rotate at a first rotation speed corresponding to the first rotation range.

In a possible design, based on the first rotation speed, the scanning region corresponding to the light beam from the at least one light source is a third region.

In a possible design, the method further includes: when the second scanning apparatus rotates within a second rotation range of the at least one rotation range, controlling the second scanning apparatus to rotate at a second rotation speed corresponding to the second rotation range, where the first rotation speed is different from the second rotation speed.

In a possible design, based on the second rotation speed, the scanning region corresponding to the light beam from the at least one light source is a fourth region, and light spot energy distribution of the third region is different from light spot energy distribution of the fourth region.

In a possible design, a ratio of the second rotation speed to the first rotation speed is x, and 1<x≤1000.

In a possible design, a proportion of the third region in the field of view region of the scanning system is γ, and 0.01≤γ<1.

In a possible design, a deviation between a center of the third region and a center of the field of view region of the scanning system is θ, and 0≤θ≤90°.

In a possible design, the second scanning apparatus is a multi-facet rotation mirror, the multi-facet rotation mirror has F reflective surfaces, and F is a positive integer greater than 1; the multi-facet rotation mirror is configured to rotate around a rotation shaft; and when the multi-facet rotation mirror rotates within a rotation range of the at least one rotation range, the light beam from the at least one light source is reflected by one of the F reflective surfaces.

In a possible design, the method further includes: controlling the first scanning apparatus to rotate once each time the second scanning apparatus rotates by the at least one rotation range; or controlling the second scanning apparatus to rotate by a preset angle each time the first scanning apparatus swings by the swing angle range, where the preset angle is equal to a transverse angular resolution of the scanning system.

In a possible design, the method further includes: controlling, based on historical point cloud data obtained by the scanning system and/or information obtained by another sensor, the first scanning apparatus to swing in the first swing manner in a first time period and/or controlling the second scanning apparatus to rotate at the first rotation speed in a second time period.

In a possible design, the system includes at least one transmitting optical system, and at least two transmitting optical paths in the system share a same transmitting optical system. The system further includes at least one receiving optical system, and at least two receiving optical paths in the system share a same receiving optical system.

In a possible design, the at least one transmitting optical system and the at least one receiving optical system are in an architecture of a same axis; or the at least one transmitting optical system and the at least one receiving optical system are in an architecture of different axes; and the system further includes a third scanning apparatus, where the third scanning apparatus is synchronized with the first scanning apparatus, and the third scanning apparatus is configured to reflect a light beam returned from the field of view.

According to a third aspect, a processing apparatus is provided, including at least one processor and an interface circuit.

The interface circuit is configured to: receive a signal from another apparatus different from the apparatus and transmit the signal to the processor, or send a signal from the processor to another apparatus different from the apparatus. The processor is configured to implement the method in the second aspect or any possible design of the second aspect by using a logic circuit or executing code instructions.

According to a fourth aspect, a computer-readable storage medium is provided. The readable storage medium is configured to store instructions, and when the instructions are executed, the method according to the second aspect or any possible design of the second aspect is implemented.

According to a fifth aspect, a computer program product is provided. The computer program product stores instructions. When the computer program product runs on a computer, the computer is enabled to perform the method according to the second aspect or any possible design of the second aspect.

According to a sixth aspect, a terminal device is provided. The terminal device includes the system according to the first aspect or any possible design of the first aspect.

Optionally, the terminal device may be a vehicle, an uncrewed aerial vehicle, a helicopter, aircraft, a ship, an intelligent transportation device, a smart home device, or the like.

For beneficial effect of the second aspect to the sixth aspect, specifically refer to technical effect that can be achieved by corresponding designs in the first aspect. Details are not described herein again.

### BRIEF DESCRIPTION OF DRAWINGS

FIG. 1 is a diagram of a transverse five-way splicing scanning solution;
FIG. 2A is a diagram of a partial snap-back solution;
FIG. 2B is a diagram of a retrace scanning solution;
FIG. 3 is a diagram of an application scenario of a lidar according to an embodiment of this application;
FIG. 4A and FIG. 4B are diagrams of two driving scenarios according to an embodiment of this application;
FIG. 5 is a diagram of a scanning system according to an embodiment of this application;
FIG. 6 is a diagram of another scanning system according to an embodiment of this application;
FIG. 7 is a diagram of a scanning manner according to an embodiment of this application;
FIG. 8 is a diagram of an ROI (namely, a first ROI) formed in a first direction according to an embodiment of this application;
FIG. 9 is a diagram of included angles of light beams of a plurality of light sources according to an embodiment of this application;
FIG. 10 is a diagram of scanning paths of a plurality of light sources according to an embodiment of this application;
FIG. 11A to FIG. 11C are diagrams of several swing manners according to an embodiment of this application;
FIG. 12 is a diagram of a scanning start location of a first scanning apparatus according to an embodiment of this application;
FIG. 13 is a diagram of change of a scanning angle of a first scanning apparatus according to an embodiment of this application;
FIG. 14 is a diagram of incident cases of light beams of a plurality of light sources in a field of view according to an embodiment of this application;
FIG. 15 is a diagram of another scanning system according to an embodiment of this application;
FIG. 16 is a diagram of effect of scanning at a constant speed by a light beam in a second direction according to an embodiment of this application;
FIG. 17 is a diagram of effect of scanning at a non-constant speed by a light beam in a second direction according to an embodiment of this application;
FIG. 18 is a diagram of an ROI (namely, a second ROI) formed in a second direction according to an embodiment of this application;
FIG. 19 is a diagram of another ROI (namely, a second ROI) formed in a second direction according to an embodiment of this application;
FIG. 20 is a diagram of another scanning system according to an embodiment of this application; and
FIG. 21 is a flowchart of a scanning method according to an embodiment of this application.

### DESCRIPTION OF EMBODIMENTS

For ease of understanding the technical solutions of this application, the following first explains some terms used in embodiments of this application.
1. A region of interest (ROI) is a region with a high angular resolution in a field of view region. A lidar can detect finer object information in the region.
2. A field of view (Field of View, FOV) is a receiving field of view of a lidar receiving system.
3. An angular resolution is an angle spacing between two adjacent detection points of a lidar, and is classified into a horizontal (or transverse) angular resolution and a vertical (or longitudinal) angular resolution.
4. A frame rate is a quantity of times a lidar returns overall point cloud data per second.
5. Terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one of a, b, or c may represent a, b, c, a and b, b and c, a and c, or a, b, and c.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, a first priority criterion and a second priority criterion are merely used to distinguish between different criteria, but do not indicate different content, priorities, importance, or the like of the two criteria.

In addition, terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

In artificial intelligence fields such as self-driving and robotics, compared with a camera vision solution, a lidar has advantages such as all-weather working, a measurement resolution, a strong anti-interference capability, and a strong penetration capability, and can automatically sense a road environment and assist a vehicle to complete a preset target. It is foreseeable that the lidar is to be widely used in the future. At the same time, as a large quantity of vendors are entering the lidar field, technology update and iteration are fast, and competition is fierce. It is a very challenging task to be competitive, especially in three key indicators, namely, a measurement distance, an angular resolution, and a FOV, while meeting requirements of an automotive grade and human eye safety.

In the autonomous and assisted driving fields, in consideration of factors such as vehicle costs and autonomous driving requirements, a solution in which an entire vehicle is equipped with one lidar is a mainstream solution in current and next few years. Therefore, how to implement effect of a full field-of-view and a high resolution by using a single lidar as much as possible while ensuring low costs and a small size of the lidar, to adapt to more road conditions and scenarios becomes a main problem.

The lidar mainly includes a transmitting system (TX), a receiving system (RX), and a scanner. The TX transmits a laser line at specific power, and after the laser line is diffusely reflected by an object, a signal light is returned and received by the RX. In a scanning process, the lidar mainly implements detection in different field of view regions by rotating the TX and the RX. A lidar system can implement an ROI region by using a special arrangement of the Tx and the Rx and adjusting a scanning manner of the scanner. A lidar system with an ROI, especially an ROI that can be flexibly adjusted, is to have a great advantage in the current market demand application.

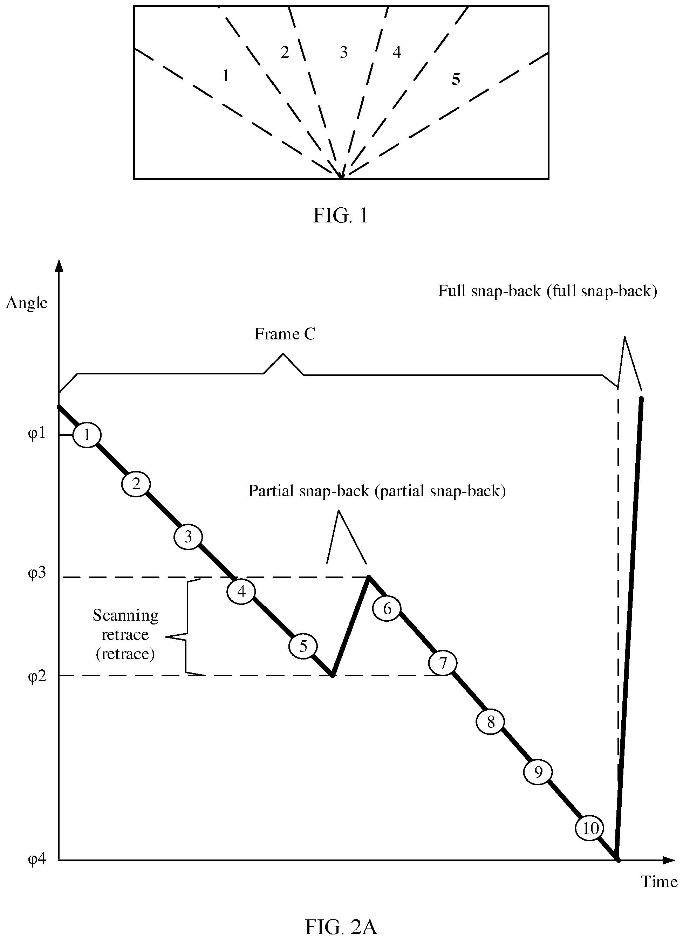

In a possible solution, the lidar uses a two-dimensional micro-electro-mechanical system (Micro-Electro-Mechanical System, MEMS) galvanometer as a scanning device, and implements a detection field of view of a two-dimensional FOV through fast scanning of the MEMS. Limited by a small scanning angle of the MEMS, this solution is a solution in which a 120° transverse FOV is implemented through transverse five-channel stitching, as shown in FIG. 1. An ROI region in this solution is implemented by reducing a longitudinal scanning speed of the MEMS. When a system frame rate remains unchanged, an interval angle of adjacent detection points may be reduced by reducing the scanning speed, to obtain point clouds with an overlapping region, and further improve a resolution according to a super-resolution algorithm.

However, because multi-channel stitching is used in a transverse field of view in this solution, a resolution of the ROI region in the transverse field of view cannot be improved and adjusted. In addition, in the solution, the resolution is improved by changing a scanning speed, which has high requirements on control, power consumption, and stability of the scanning device, and further poses high requirements on back-end algorithm processing. Therefore, stability and generalized adaptation of the entire system are challenging. In addition, the resolution of the ROI is improved through super-resolution computing by using overlapping point clouds, and point cloud quality and stability of the ROI also pose high requirements on the system and the algorithm.

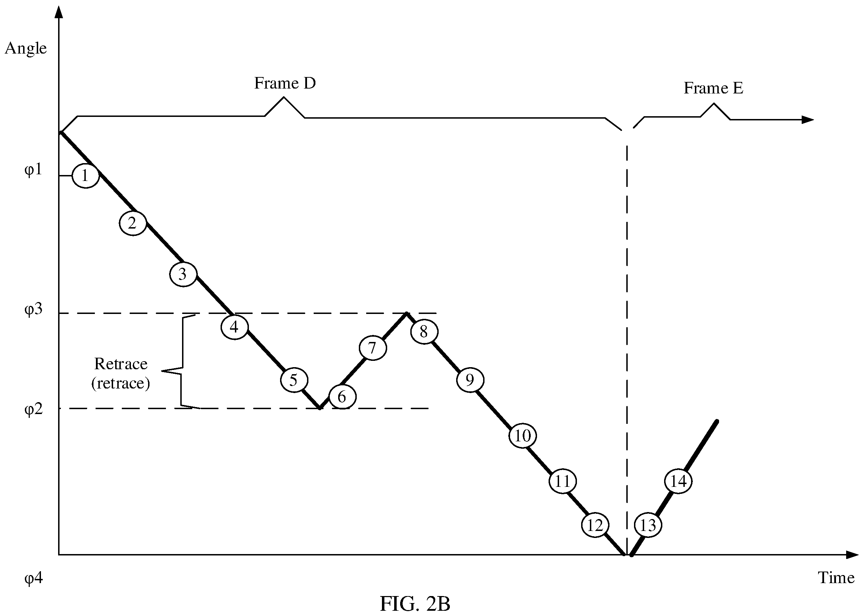

In another possible solution, an ROI region of the lidar is implemented by increasing an angular resolution by using a one-dimensional fast steering mirror. A main method for implementing the ROI is to add a partial snap-back or use a retrace scanning manner, and a diagram of a principle of the method is shown in FIG. 2A and FIG. 2B. FIG. 2A shows a partial snap-back solution. A short scanning retrace is added to a single-frame scanning procedure, and repeated scanning of a small region is performed. An angle of location of a second time of scanning is staggered with that of a first time of scanning, so that an angular resolution of the ROI region may be increased. A full snap-back between frames is a rapid retrace process, that is, the full snap-back between frames does not participate in scanning. FIG. 2B shows a retrace scanning solution. In this solution, the rapid retrace is canceled, so that the full snap-back also participates in scanning, and a retrace scanning angle and a forward scanning angle are staggered in the ROI region, to implement a function of increasing the angular resolution of the ROI.

However, in the partial snap-back solution, a load of a motor of a fast steering mirror is increased, scanning complexity in a scanning periodicity is increased, and higher requirements are posed on overall stability and power consumption of a motor. In the retrace scanning solution, original rapid retrace is canceled, and a scanning manner is directly changed, which greatly increases scanning time of a single periodicity and greatly affects a system frame rate. To ensure the frame rate, a motor scanning speed needs to be increased, which increases power consumption and reduces a theoretical scanning angular resolution. This poses a high requirement on the balance of the scanning solution. In addition, in the two solutions, a plurality of point clouds with an overlapping region are obtained for super-resolution to improve a resolution, and point cloud quality and stability are highly dependent on an algorithm.

In another possible solution, the lidar coordinates a speed of a scanning element and an optical pulse interval, to improve an angular resolution of an ROI region. In addition, a plurality of Txs may be used in the lidar system, and an orientation of each Tx can be adjusted. Therefore, an angle between adjacent Txs may be controlled. When a scanning system targets an ROI in a FOV, a plurality of Tx light beams generate a dense resolution. When the scanning system targets a non-ROI in the FOV, the plurality of Tx light beams generate a sparse resolution. In this way, an arrangement of the ROI region is adjusted.

However, in this solution, the angular resolution is improved by changing the scanning speed of the scanning element, which has high requirements on control, power consumption, stability, and the like of the scanning device, and also poses high requirements on back-end algorithm processing. Therefore, stability and generalized adaptation of an entire system are challenging. In this solution, a high resolution is implemented by arranging a plurality of Txs, a plurality of groups of optical engine assemblies are required, and a direction of the optical engine assembly needs to be adjusted in real time. This greatly increases costs, and poses high requirements on motor control, overall device power consumption, stability, and algorithm adaptability.

To resolve the foregoing one or more technical problems, technical solutions in embodiments of this application are provided.

The technical solutions provided in embodiments of this application may be applied to a terminal device with a detection capability, and in particular, are applicable to a terminal device with a laser detection capability. The terminal device may be an intelligent device with a laser detection capability, and includes but is not limited to a smart home device, for example, a television, a robotic vacuum cleaner, a smart lamp, a speaker system, an intelligent lighting system, an electric appliance control system, home background music, a home theater system, an intercom system, and video surveillance, an intelligent transportation device, for example, a vehicle, a ship, an uncrewed aerial vehicle, a train, a van, a wagon, and a truck, and an intelligent manufacturing device, for example, a robot, industrial equipment, intelligent logistics, and an intelligent factory. Alternatively, the terminal device may be a computer device with a laser detection capability, for example, a desktop computer, a personal computer, or a server. It should be further understood that the terminal device may alternatively be a portable electronic device with a laser detection capability, for example, a mobile phone, a tablet computer, a palmtop computer, a headset, an acoustic device, a wearable device (for example, a smartwatch), an in-vehicle device, a virtual reality device, or an augmented reality device. An example of the portable electronic device includes but is not limited to a portable electronic device using iOS^{®}, Android^{®}, Microsoft^{®}, Harmony^{®}, or another operating system. The portable electronic device may alternatively be, for example, a laptop computer (Laptop) with a touch-sensitive surface (for example, a touch panel).

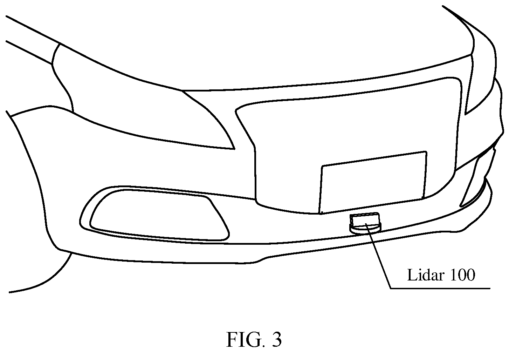

In a specific scenario example, the technical solutions provided in embodiments of this application may be applied to a lidar. FIG. 3 is a diagram of an application scenario of a lidar according to an embodiment of this application. In this example, a lidar 100 is installed on a vehicle, and therefore is also referred to as an in-vehicle lidar. In addition to the in-vehicle lidar, the lidar further includes a ship-borne lidar installed on a ship, an on-board lidar installed on a machine, and the like. In a possible example, as shown in FIG. 3, the lidar 100 may be specifically installed at a head location of the vehicle. In a driving process of the vehicle, the lidar 100 can send a detection signal (specifically, a laser signal), the detection signal is reflected by an object after being irradiated to the object in front of the vehicle, and a reflected detection signal (also referred to as a reflected signal or an echo signal) may be received by the lidar 100. In this way, the lidar 100 can determine, based on the reflected detection signal, information about an obstacle in front of the vehicle, such as a distance, an orientation, a height, a speed, a posture, a size, or a shape of the obstacle, so as to implement a driving function of the vehicle by using the information about the obstacle, including but not limited to self-driving or assisted driving.

It should be noted that, in the example provided in FIG. 3, the lidar 100 is installed at the head location of the vehicle. However, in actual application, this is not limited thereto. The lidar 100 may alternatively be installed at another location, for example, a rear or a top of the vehicle.

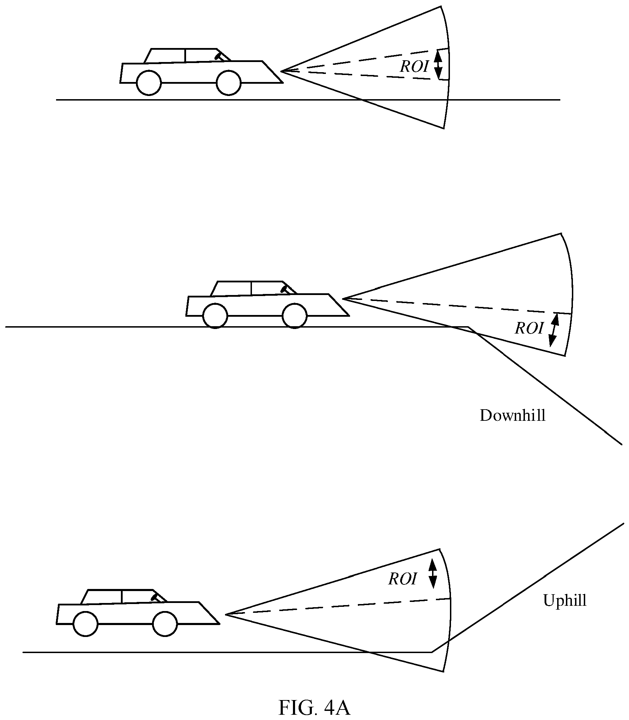

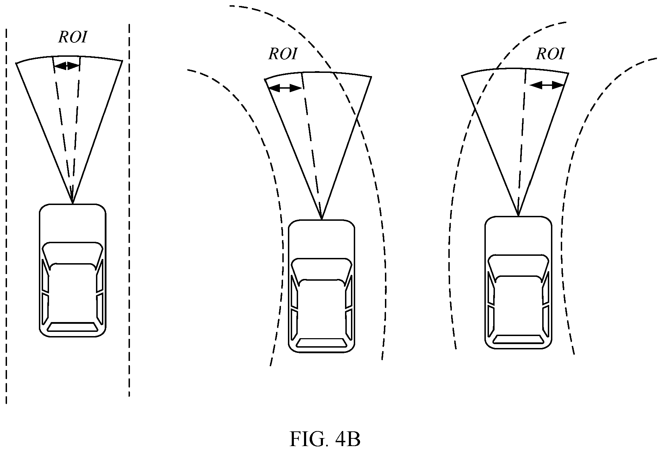

In the technical solutions provided in embodiments of this application, the lidar 100 may adjust the ROI to different locations based on different driving scenarios. For example, as shown in FIG. 4A, when a vehicle travels on a horizontal road surface, an ROI is located in a center region of a field of view; when the vehicle goes uphill, the ROI moves upward, so that a situation of an uphill road can be better observed; and when the vehicle goes downhill, the ROI moves downward, so that a situation of a downhill road can be better observed. Refer to FIG. 4B. When a vehicle travels on a horizontal road surface, an ROI is located in a center region of a field of view; when the vehicle turns left, the ROI is adjusted leftward, so that a situation in a front left side can be better observed; and when the vehicle turns right, the ROI is adjusted rightward, so that a situation in a front right side can be better observed. It may be understood that FIG. 4A and FIG. 4B are merely examples. In actual application, the technical solutions in embodiments of this application may be applied to another scenario in which a location of an ROI needs to be adjusted (for example, a crossroad, a village road, or the like that has no rule, or another road condition and scenario that are difficult to predict). A specific solution for adjusting a location of an ROI is described in detail below with reference to the accompanying drawings.

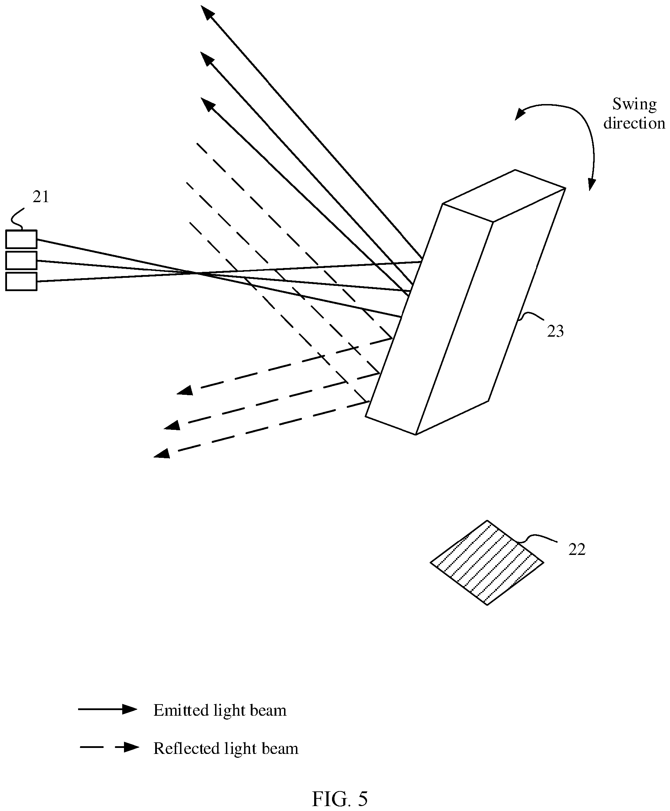

FIG. 5 is a diagram of a scanning system according to an embodiment of this application. The system may be a terminal device with a detection capability, and for example, is used in the lidar 100 shown in FIG. 3. The system includes at least one light source 21, at least one control apparatus 22, and a first scanning apparatus 23.

The at least one light source 21 is configured to emit a light beam.

The first scanning apparatus 23 is configured to reflect the light beam emitted by the at least one light source 21. It may be understood that although the first scanning apparatus 23 reflects the light beam emitted by the at least one light source 21, the light beam may have passed through a specific path after being emitted from the light beam emitted by the at least one light source 21 and before being incident to the first scanning apparatus 23. Therefore, in this process, the light beam may be reflected or transmitted, or undergoes other processing, by another element in the scanning system. This does not mean that the light beam is definitely directly incident to the first scanning apparatus 23 after being emitted from the light source 21.

The at least one control apparatus 22 has a control capability, and can send a control instruction to another component to coordinate work of the another component. For example, the at least one control apparatus 22 may control the first scanning apparatus 23 to swing within a swing angle range.

During specific implementation, the at least one control apparatus 22 may be integrated into one device for implementation, or may be separately implemented in a plurality of devices. For example, the at least one control apparatus 22 may be integrated into a device for implementation. The device may be specifically an integrated circuit chip, for example, may be a general-purpose processor, may be a field programmable gate array (Field Programmable Gate Array, FPGA), may be an application specific integrated chip (Application Specific Integrated Circuit, ASIC), may be a system on chip (System on Chip, SoC), may be a network processor (Network Processor, NP), may be a digital signal processing circuit (Digital Signal Processor, DSP), may be a micro controller unit (Micro Controller Unit, MCU), or may be a programmable controller (Programmable Logic Device, PLD), or another programmable logic device, discrete gate or transistor logic device, discrete hardware component, or another integrated chip. The device may include a central processing unit (Central Processor Unit, CPU), a neural-network processing unit (Neural-network Processing Unit, NPU), and a graphics processing unit (Graphics Processing Unit, GPU), and may further include an application processor (Application Processor, AP), a modem processor, an image signal processor (Image Signal Processor, ISP), a video codec, a digital signal processor (Digital Signal Processor, DSP), a baseband processor, and/or the like. This is not specifically limited.

Further, during specific implementation, the at least one control apparatus 22 may be connected to another component in the scanning system by using a controller area network (Controller Area Network, CAN) bus or in another manner, to send a control instruction to another component. It should be noted that, for ease of clearly showing components in the system, FIG. 5 does not show a connection relationship between the at least one control apparatus 22 and another component.

It may be understood that FIG. 5 shows only some elements in the scanning system, and the scanning system may actually further include another element.

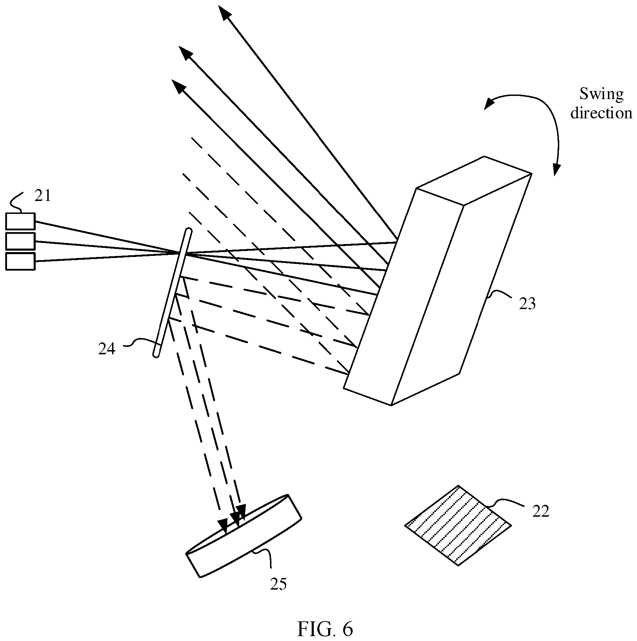

For example, FIG. 6 is a diagram of another scanning system according to an embodiment of this application. In addition to a light source 21, at least one control apparatus 22, and a first scanning apparatus 23, the scanning system may further include a beam splitter 24 and a receiver 25. The beam splitter 24 is configured to transmit a light beam from the light source 21 and reflect a light beam returned from a field of view (specifically, the light beam from the light source 21 is transmitted by the beam splitter 24, and then reflected by the first scanning apparatus 23; and the light beam returned from the field of view is reflected by the first scanning apparatus 23, and then reflected by the beam splitter 24). The receiver 25 is configured to receive and process the light beam returned from the field of view. The receiver 25 may convert optical information into electrical information (for example, point cloud data), and process the electrical information to obtain related information (for example, a distance, a shape, or a speed) of a target. Alternatively, the receiver 25 submits the electrical information to a processing apparatus, and the processing apparatus processes the electrical information to obtain related information of a target. It may be understood that the processing apparatus and the at least one control apparatus 22 may be integrated into one device for implementation, or may be separately implemented in a plurality of devices. This is not limited in this application.

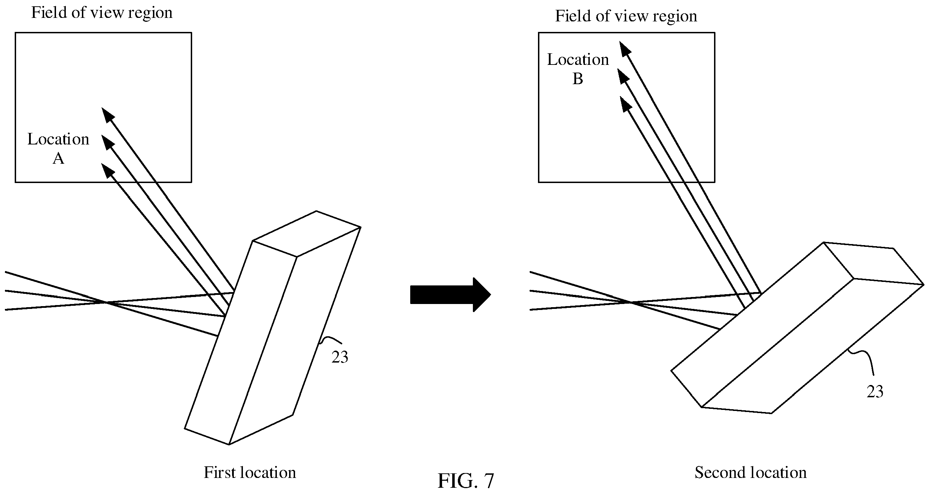

In this embodiment of this application, when the first scanning apparatus 23 is located at different locations (or angles), the light beam (namely, the emitted light beam) that is from the at least one light source 21 and is reflected by the first scanning apparatus 23 may be incident to different locations in the field of view. For example, as shown in FIG. 7, when the first scanning apparatus 23 swings to a first location, the first scanning apparatus 23 drives the light beam to be incident to a location A in a field of view region; and when the first scanning apparatus 23 swings to a second location, the first scanning apparatus 23 drives the light beam to be incident to a location B in the field of view region. Therefore, the at least one control apparatus 22 controls swing of the first scanning apparatus 23, to implement scanning of the field of view region by the light beam in a specific direction.

In this embodiment of this application, a swing direction of the first scanning apparatus 23 may be any direction, for example, a longitudinal direction (or a vertical direction), a transverse direction (or a horizontal direction), or another direction. This is not limited in this application. The at least one control apparatus 22 controls swing of the first scanning apparatus 23, to implement longitudinal scanning, transverse scanning, or scanning in another direction of the field of view region by the light beam.

It may be understood that there is a correspondence between the swing direction of the first scanning apparatus 23 and a scanning direction of the light beam driven by the first scanning apparatus 23. When the swing direction of the first scanning apparatus 23 changes, the scanning direction of the light beam driven by the first scanning apparatus 23 also changes. The swing direction of the first scanning apparatus 23 may be the same as (for example, the first scanning apparatus 23 swings transversely to drive transverse scanning of the light beam) or different from (for example, the first scanning apparatus 23 swings transversely to drive longitudinal scanning of the light beam) the scanning direction of the light beam driven by the first scanning apparatus 23. The specific correspondence between the swing direction of the first scanning apparatus 23 and the scanning direction of the light beam is related to design manners of various optical elements (such as various possible reflectors, lenses, or other scanning apparatuses) in the scanning system.

For ease of description, in the following, an example in which the first scanning apparatus 23 swings in a first direction to drive the light beam to scan in the field of view region in the first direction is used. The first direction may be any direction, for example, a longitudinal direction, a transverse direction, or another direction.

In this embodiment of this application, when the first scanning apparatus 23 swings within a swing angle range, a light spot formed after the light beam (namely, the emitted light beam) emitted by the at least one light source 21 is incident to the field of view region is a nonuniform light spot, in other words, light density of the emitted light beam incident to the field of view region is non-uniformly distributed in the first direction.

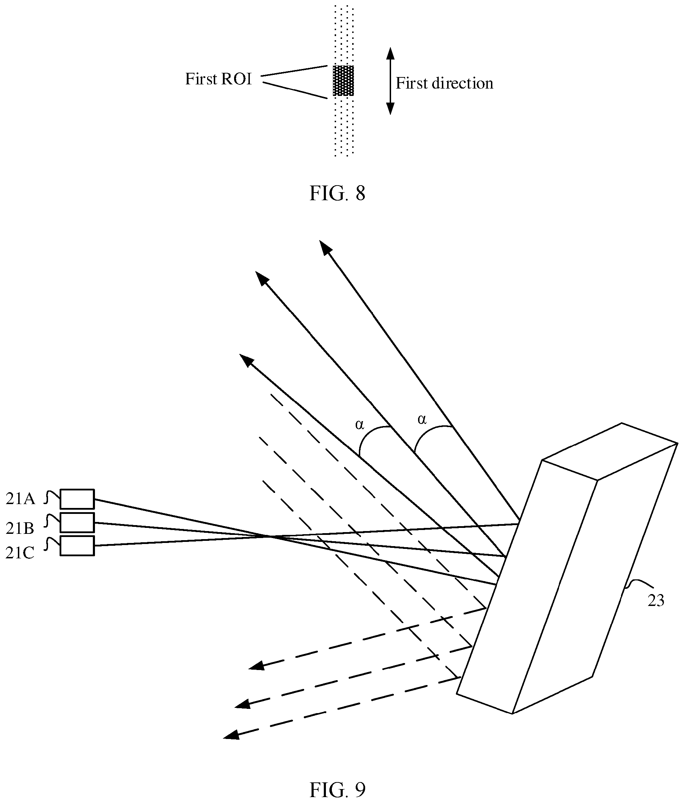

For example, as shown in FIG. 8, in the first direction, light density at a center location of the light spot is higher than light density at an edge location. It should be understood that FIG. 8 is merely an example, and shows only two different density degrees (that is, a center region is of one density degree, and an edge region is of another density degree). Actually, there may be more types of density degrees. In addition, a high-density region is not limited to the center region, and may be located at another location.

Correspondingly, the scanning system may obtain point cloud data with a high resolution at a location with high light density, and the scanning system may obtain point cloud data with a low resolution at a location with low light density.

It can be learned that after the light beam from the at least one light source 21 is incident to the field of view, a high-resolution region (namely is, an ROI) may be naturally formed in the first direction (for ease of description, the ROI in the first direction is referred to as a first ROI in this specification). Therefore, in this embodiment of this application, the at least one control apparatus 22 may adjust a location of the high-resolution region (namely, the ROI) in the first direction by controlling a swing manner of the first scanning apparatus 23, to meet requirements for improving an ROI function and flexibly configuring the ROI.

In a possible design, the at least one light source 21 is a plurality of light sources, and there is an included angle between light beams that are emitted by at least two light sources of the at least one light source 21 to the field of view region. For example, as shown in FIG. 9, an included angle between a light beam that is emitted by a first light source 21A to the field of view region of the scanning system and a light beam that is emitted by a second light source 21B to the field of view region of the scanning system is α, and an included angle between a light beam that is emitted by the second light source 21B to the field of view region of the scanning system and a light beam that is emitted by a third light source 21C to the field of view region of the scanning system is α, where α>0. It should be noted that, an example in which an included angle between two adjacent light beams is α is used in FIG. 9. However, in actual application, included angles between different two adjacent light beams may alternatively be different. For example, an included angle between a light beam that is emitted by a first light source 21A to the field of view region of the scanning system and a light beam that is emitted by a second light source 21B to the field of view region of the scanning system is α1, and an included angle between a light beam that is emitted by the second light source 21B to the field of view region of the scanning system and a light beam that is emitted by a third light source 21C to the field of view region of the scanning system is α2, where α1≠α2.

Because there is an included angle between light beams emitted by different light sources to the field of view region, when the first scanning apparatus 23 drives the emitted light beam for scanning, some locations in the field of view region may be repeatedly scanned by light beams emitted by different light sources 21, to form the high-resolution region.

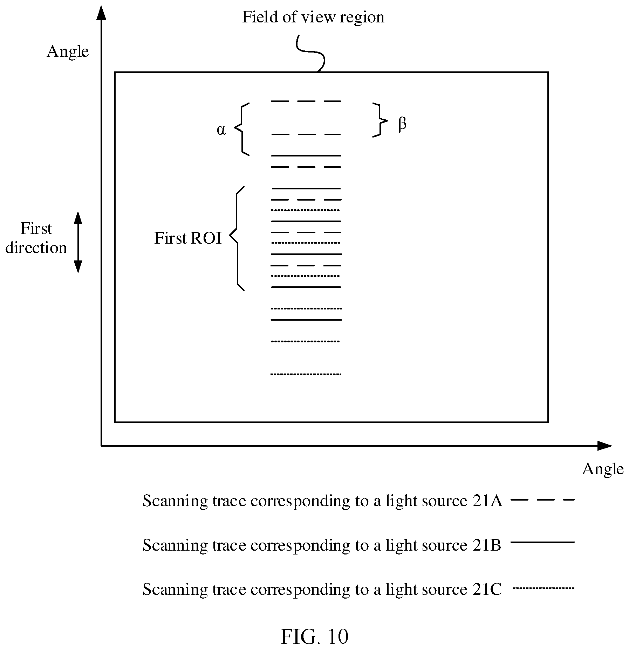

For example, FIG. 10 is a diagram of scanning paths of a plurality of light sources 21. In a swing process, the first scanning apparatus 23 drives a light beam corresponding to each light source 21 (for example, the light source 21A, the light source 21B, and the light source 21C) in the plurality of light sources 21 to generate a plurality of scanning traces. At a center location of the field of view, there are scanning traces corresponding to the plurality of light sources 21, to form the high-resolution region (namely, the first ROI), and at an edge region of the field of view, there are only scanning traces corresponding to a few light sources 21 or a scanning trace corresponding to a single light source 21 (for example, the light source 21A or the light source 21C), to form a low-resolution region.

It may be understood that the light source 21A, the light source 21B, and the light source 21C in FIG. 9 and FIG. 10 are merely examples. Actually, there may be more or fewer light sources 21.

In a possible design, when controlling the first scanning apparatus 23 to swing within the angle range, the at least one control apparatus 22 may be configured to control the first scanning apparatus 23 to rotate N times from an angle to another angle, where N is a positive integer. A value of N may be related to an angular resolution of the scanning system in the first direction. For example, a higher angular resolution in the first direction indicates a larger value of N, and a lower angular resolution in the first direction indicates a smaller value of N.

It is assumed that the first scanning apparatus 23 rotates by an angle β each time, where β>0.

α>β, that is, an included angle of light beams that are emitted by at least two light sources 21 to the field of view is greater than an included angle by which the first scanning apparatus 23 rotates each time, where a distribution relationship between α and β is shown in FIG. 10. It may be understood that FIG. 10 is a diagram in angular space, and a vertical coordinate in FIG. 10 indicates a field of view in the first direction.

In this way, it can be ensured that some locations in the field of view region can be scanned by light beams emitted by different light sources 21, to form the high-resolution region. This improves detection performance.

In a possible design, the first scanning apparatus 23 may have a plurality of swing manners. In the plurality of swing manners, one or more of swing start locations, swing center points, or swing angle ranges of different swing manners are different.

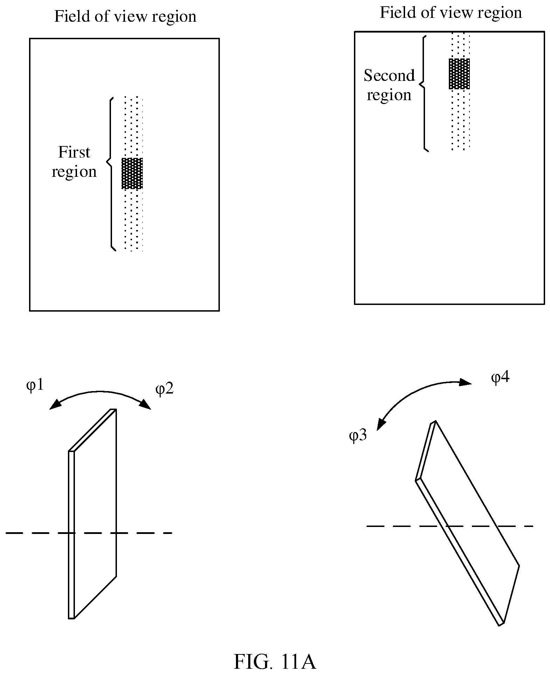

In a specific example, FIG. 11A shows two possible swing manners of the first scanning apparatus 23.

When the first scanning apparatus 23 swings in a first swing manner, the at least one control apparatus 22 is specifically configured to control the first scanning apparatus 23 to rotate N times from a first angle ϕ1 to a second angle ϕ2, where N is a positive integer. In the first swing manner, a scanning region corresponding to the light beam from the at least one light source 21 is a first region.

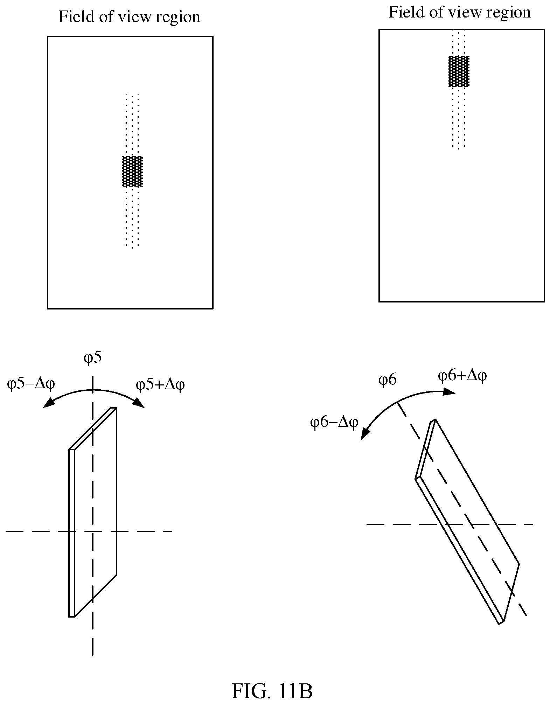

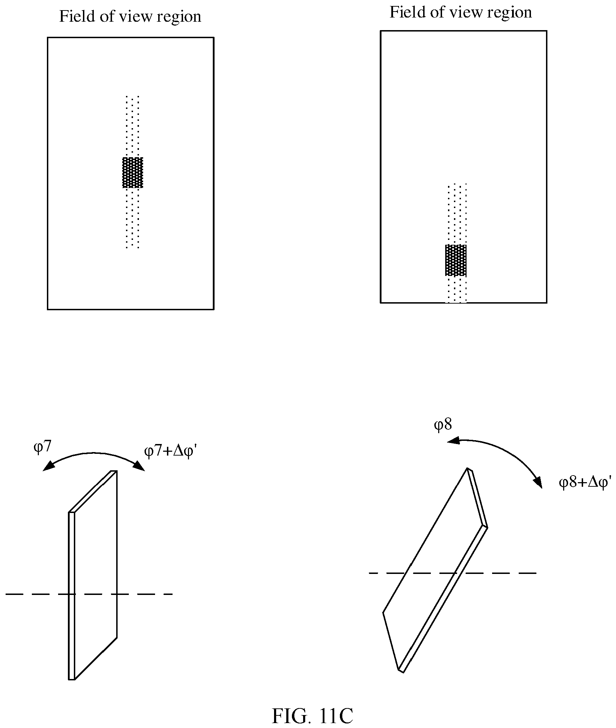

When the first scanning apparatus 23 swings in a second swing manner, the at least one control apparatus 22 is specifically configured to control the first scanning apparatus 23 to rotate M times from a third angle ϕ3 to a fourth angle ϕ4, where M is a positive integer, and M and N may be the same or different. This is not limited in this application. In the second swing manner, the scanning region corresponding to the light beam from the at least one light source 21 is a second region. It should be understood that FIG. 11A, FIG. 11B, and FIG. 11C are merely examples, and an actual angle and a location of the field of view region may not be precise enough.

It may be understood that swing amplitudes (for example, |ϕ1-ϕ2| and |ϕ3-ϕ4| corresponding to different swing manners may be the same or different. This is not limited in this application.

Because an angle swing range corresponding to the first swing manner is different from an angle swing range corresponding to the second swing manner, light spot energy distribution corresponding to the first region is different from light spot energy distribution corresponding to the second region. In other words, a distribution location of a first ROI (or a high-resolution region) in the first region in the field of view region is different from a distribution location of a first ROI (or a high-resolution region) in the second region in the field of view region. For example, in the example provided in FIG. 11A, in the first swing manner, the first ROI is distributed in the center location of the field of view region in the first direction; and in the second swing manner, the first ROI deviates from the center location of the field of view region in the first direction.

It may be understood that the first region and the second region are final scanning regions (namely, regions where the emitted light beam incident to the field of view finally arrives), and specific locations of the first region and the second region are related to a scanning manner of the first scanning apparatus 23, and are further related to an optical system (for example, optical elements like various possible reflectors, lenses, or other scanning apparatuses) before or after the first scanning apparatus 23. Correspondingly, a specific location of the first ROI in the first direction is related to a value of the swing angle range and a design of another optical element in the scanning system. The correspondence between the swing angle range of the first scanning apparatus 23 and the location of the first ROI provided in FIG. 11A is merely a possible example, but not a limitation.

In another specific example, FIG. 11B shows two possible swing manners of the first scanning apparatus 23, and the two manners respectively correspond to two swing centers. In a first swing manner, the first scanning apparatus 23 uses ϕ5 as a center, and swings counterclockwise or clockwise by an amplitude of ±Δϕ, and the first ROI deviates from the center location of the field of view region in the first direction. In a second swing manner, the first scanning apparatus 23 uses ϕ6 as a center, and swings counterclockwise or clockwise by an amplitude of ±Δϕ, and the first ROI deviates from the center location of the field of view region in the first direction. Similarly, a specific location of the first ROI in the first direction is related to a swing center location and a design of another optical element in the scanning system. The correspondence between the swing center location of the first scanning apparatus 23 and the location of the first ROI provided in FIG. 11B is merely a possible example, but not a limitation.

In another specific example, FIG. 11C shows two possible swing manners of the first scanning apparatus 23, and the two manners respectively correspond to two swing start points. In a first swing manner, the first scanning apparatus 23 uses ϕ7 as a start point, and swings clockwise by an amplitude of Δϕ', and the first ROI deviates from the center location of the field of view region in the first direction. In a second swing manner, the first scanning apparatus 23 uses ϕ8 as a start point, and swings clockwise by an amplitude of Δϕ', and the first ROI deviates from the center location of the field of view region in the first direction. Similarly, a specific location of the first ROI in the first direction is related to a swing start location and a design of another optical element in the scanning system. The correspondence between the swing start location of the first scanning apparatus 23 and the location of the first ROI provided in FIG. 11C is merely a possible example, but not a limitation.

It may be understood that two swing manners are used as examples in the foregoing. In actual application, the first scanning apparatus 23 may alternatively have more swing manners. Correspondingly, light spot energy distribution of scanning regions corresponding to different swing manners in the plurality of swing manners is different. In other words, light density distribution is different. In other words, the location of the first ROI in the field of view region is different.

In addition, in actual application, different swing manners may be distinguished by using another feature in addition to the swing start location, the swing center point, or the swing angle range. This is not limited in this application.

In this way, the distribution location of the first ROI in the first direction can be controlled by controlling the first scanning apparatus 23 to swing in different swing manners.

In a possible design, the at least one control apparatus 22 may set one or more of the plurality of swing manners as a default swing manner. For example, after the scanning system (or a device in which the scanning system is located, for example, a lidar 100) is powered on, the first scanning apparatus 23 swings in the default swing manner, or in a set scenario, the first scanning apparatus 23 swings in the default swing manner. Optionally, the default swing manner may be the first swing manner, and the first swing manner may be specifically a swing manner that enables the first ROI to correspond to a center field of view, for example, the first swing manner is the swing manner shown in FIG. 11A, that is, the swing angle range of the first scanning apparatus 23 is (ϕ1, ϕ2). In this way, user experience can be improved.

In a possible design, a difference between a swing angle range corresponding to the first swing manner and a swing angle range corresponding to the second swing manner is less than or equal to 90 degrees.

In other words, a swing angle of the first scanning apparatus 23 can be adjusted by a maximum of ±90 degrees. For example, if a minimum value of a swing start point of the first scanning apparatus 23 is ϕa, and a maximum value is ϕb, ϕb-ϕa≥90°; or if a minimum value of a swing center of the first scanning apparatus 23 is ϕc, and a maximum value is ϕd, ϕd-ϕc≥90°; or if a minimum value of a swing end point of the first scanning apparatus 23 is ϕe, and a maximum value is ϕf, ϕf-ϕe≥90°.

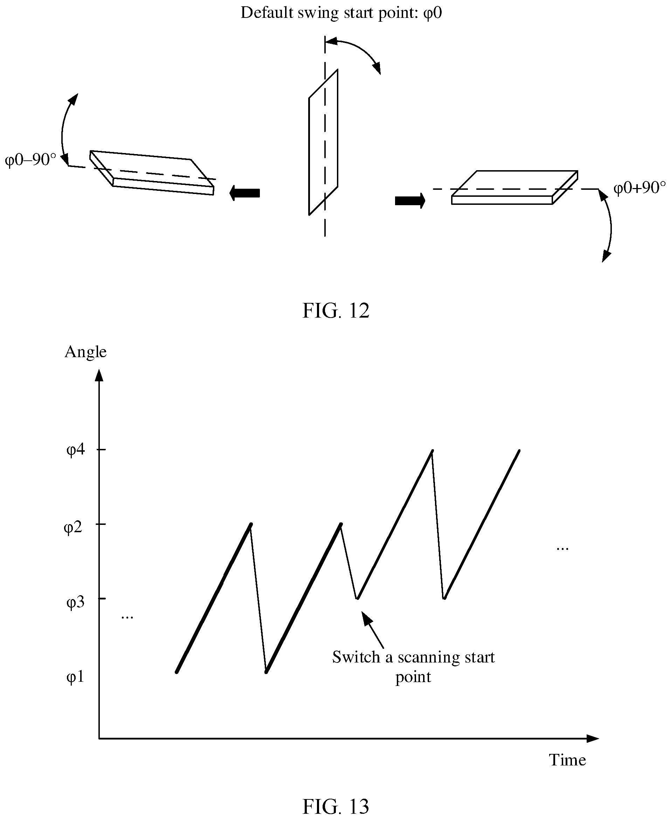

In a specific example, as shown in FIG. 12, a scanning start point of the first scanning apparatus may change by a maximum of 90° relative to a default scanning start point.

Generally, an FOV of a lidar is about 180°. Therefore, in this design manner, each swing angle range of the first scanning apparatus 23 may be within a reasonable range, to ensure an effective reflectivity within each swing angle range of the first scanning apparatus 23 for the light beam.

In a possible design, when controlling the first scanning apparatus 23 to swing in any one of the plurality of swing manners, the at least one control apparatus 22 is specifically configured to control the first scanning apparatus 23 to swing periodically in the swing manner.

The first swing manner is used as an example. The at least one control apparatus 22 may control the first scanning apparatus 23 to swing periodically in the first swing manner. For example, in each periodicity, the first scanning apparatus 23 rotates N times from the first angle ϕ1 to the second angle ϕ2. After reaching the second angle ϕ2, the at least one control apparatus 22 may control the first scanning apparatus 23 to quickly return to the first angle ϕ1 (where this process is a scanning retrace stage) to start swing of a next periodicity.

In this way, the first scanning apparatus 23 can perform scanning a plurality of times in a same scanning manner, so that the scanning system can obtain sufficient point cloud data, and a processing requirement of the system on a back-end algorithm is reduced.

In a possible design, the at least one control apparatus 22 may control the first scanning apparatus 22 to switch the swing manner in the scanning retrace stage.

For example, after the first scanning apparatus 23 swings in the first swing manner for at least one periodicity, the at least one control apparatus 22 controls the first scanning apparatus 23 to switch to swing in the second swing manner.

In a specific example, FIG. 13 is a diagram of change of a scanning angle of the first scanning apparatus 23. The first scanning apparatus 23 swings periodically in the first swing manner, that is, in each periodicity, the first scanning apparatus 23 rotates N times from the first angle ϕ1 to the second angle ϕ2, and then quickly returns to the first angle ϕ1 to start swing of a next periodicity. After at least one periodicity, when the first scanning apparatus 23 prepares for a retrace at the second angle ϕ2, the first scanning apparatus 23 does not return to the first angle ϕ1, but directly goes to the third angle ϕ3, and then swings periodically in the second swing manner, that is, the first scanning apparatus 23 rotates M times from the third angle ϕ3 to the fourth angle ϕ4, and then quickly returns to the third angle ϕ3 to start swing of a next periodicity.

In this way, the first scanning apparatus 23 switches the scanning manner in the retrace process, so that a time difference experienced by the first scanning apparatus 23 in switching the scanning manner is small and can be ignored. This better ensures scanning efficiency of the scanning system.

In a possible design, the first scanning apparatus may be a one-dimensional galvanometer. The one-dimensional galvanometer has a reflective surface, and may rotate around a rotation shaft, to reflect a light beam that is incident to the reflective surface. During specific implementation, the one-dimensional galvanometer may be, for example, a galvanometric mechanical resonance scanner or an electrothermal micro electro mechanical system (Micro Electro Mechanical System, MEMS) galvanometer. This is not limited in this application. In this way, design costs can be reduced.

In a possible design, when the at least one light source 21 is a plurality of light sources, if the first scanning apparatus 23 swings in a swing manner, only light beams of some light sources 21 can enter the field of view, a light source 21 (namely, a light source 21 corresponding to a light beam that exceeds the FOV in the first direction) whose light beam cannot enter the field of view may be turned off, avoiding interference caused by the light beam generated by the light source 21 to another valid light beam (for example, a light beam returned from the field of view) in the system.

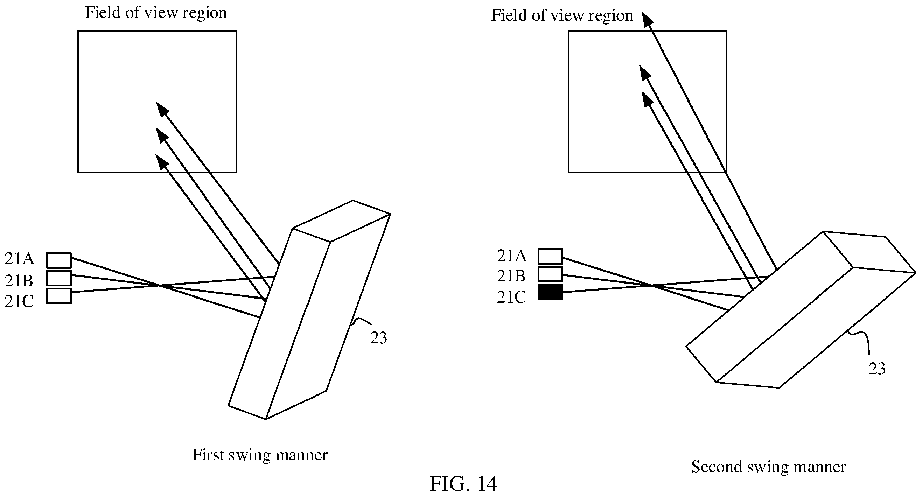

For example, as shown in FIG. 14, when the first scanning apparatus 23 swings in the first swing manner, all light beams of all light sources 21 (including the light source 21A, the light source 21B, and the light source 21C) can enter the field of view. When the first scanning apparatus 23 swings in the second swing manner, only light beams of some light sources 21 (including the light source 21A and the light source 21B) can enter the field of view, and light beams of the other light sources (the light source 21C) cannot enter the field of view. Therefore, the light source 21C may be turned off. It should be noted that turn-on and turn-off of the light source 21 may be controlled by the at least one control apparatus 22, or may be controlled by another control device in the system. This is not limited in this application.

In this way, interference of mixed light can be eliminated, and accuracy of the point cloud data can be ensured, thereby improving accuracy of target recognition. In addition, energy of the light source 21 can be further saved.

The foregoing describes a scanning solution of the scanning system in the first direction (the location of the first ROI in the first direction can be adjusted). The following describes a scanning solution of the scanning system in a second direction. The first direction is different from the second direction.

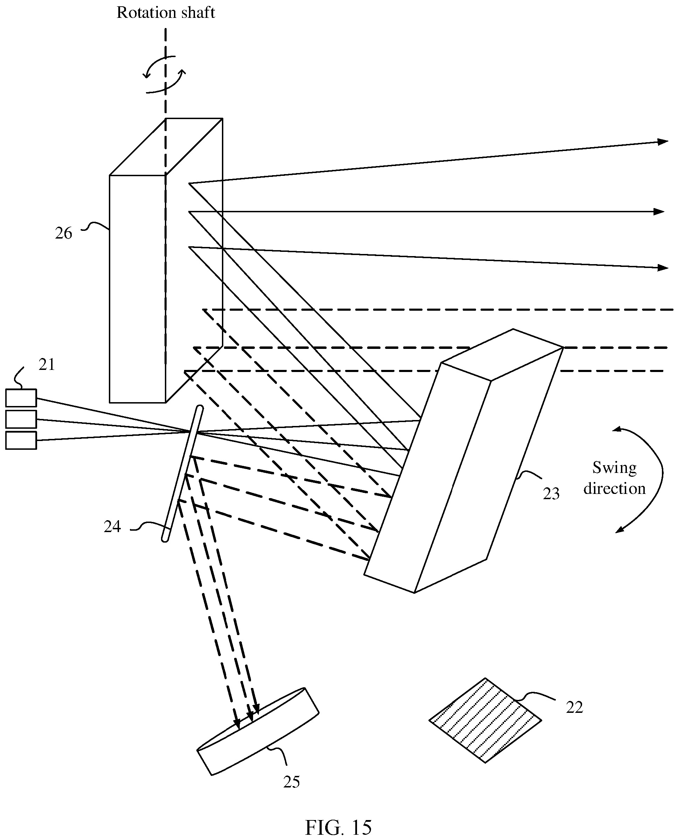

In a possible design, as shown in FIG. 15, the system further includes a second scanning apparatus 26, configured to reflect the light beam emitted by the at least one light source 21. The at least one control apparatus 22 is further configured to control the second scanning apparatus 26 to rotate within a rotation range. The first scanning apparatus 23 and the second scanning apparatus 26 respectively drive the light beam to scan in two different directions (namely, the first direction and the second direction), so as to implement two-dimensional scanning of the field of view region by the scanning system. It should be noted that the "light beam emitted by the at least one light source 21" herein is not necessarily a light beam directly from the at least one light source 21. Between the at least one light source 21 and the second scanning apparatus 26, the light beam may further pass through an optical system formed by any element, for example, a reflective surface of the first scanning apparatus 23. To be specific, the light beam reflected by the second scanning apparatus 26 may be from the at least one light source 21 and processed (including but not limited to refraction, reflection, or transmission) by another element. In a specific design, as shown in FIG. 15, for a transmitting optical path, the second scanning apparatus 26 is located behind the first scanning apparatus 23; and for a receiving optical path, the second scanning apparatus 26 is located in front of the first scanning apparatus 23.

It may be understood that there is a correspondence between a rotation direction of the second scanning apparatus 26 and a scanning direction of the light beam driven by the second scanning apparatus 26. When the rotation direction of the second scanning apparatus 26 changes, the scanning direction of the light beam driven by the second scanning apparatus 26 also changes. The rotation direction of the second scanning apparatus 26 may be the same as (for example, the second scanning apparatus 26 rotates transversely to drive transverse scanning of the light beam) or different from (for example, the second scanning apparatus 26 rotates transversely to drive longitudinal scanning of the light beam) the scanning direction of the light beam driven by the second scanning apparatus 26. The specific correspondence between the rotation direction of the second scanning apparatus 26 and the scanning direction of the light beam is related to design manners of various optical elements (such as various possible reflectors, lenses, or other scanning apparatuses) in the scanning system.

For ease of description, in the following, an example in which the second scanning apparatus 26 swings in the second direction to drive the light beam to scan in the field of view region in the second direction is used.

The second direction may be any direction, for example, a longitudinal direction, a transverse direction, or another direction, provided that the second direction is different from the first direction.

It may be understood that FIG. 15 shows only some elements in the scanning system, and the scanning system may actually further include other elements, such as various lenses and reflectors.

In a possible design, the first direction is perpendicular to the second direction. For example, the first direction is a transverse field of view direction, and the second direction is a longitudinal field of view direction; or the second direction is a transverse field of view direction, and the first direction is a longitudinal field of view direction. In this way, efficient two-dimensional scanning of the field of view region can be implemented.

For ease of understanding, in the accompanying drawings provided in this specification, the first direction is the longitudinal field of view direction, and the second direction is the transverse field of view direction. However, this is not limited in practice.

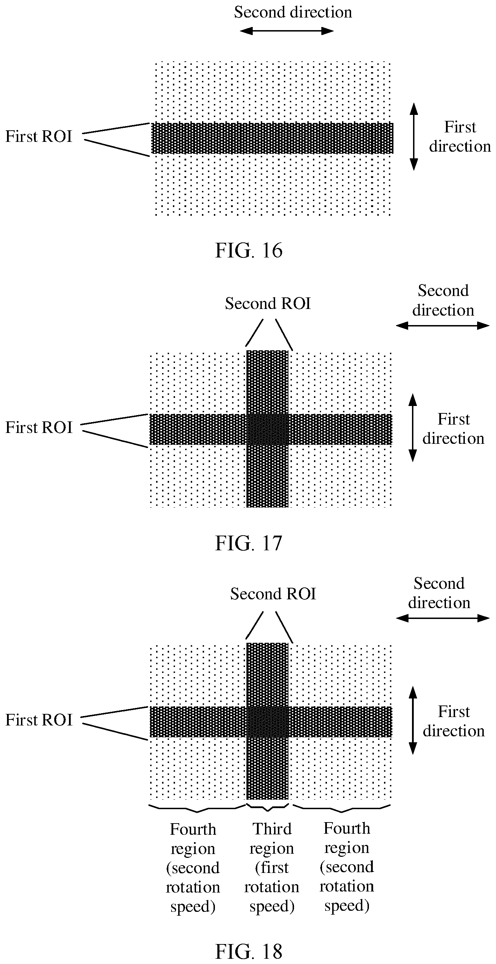

In a possible design, the at least one control apparatus 22 may control the second scanning apparatus 26 to rotate at a constant speed. Correspondingly, driven by the second scanning apparatus 26, after the light beam from the at least one light source 21 is incident to the field of view, even scanning is performed in the second direction, and light spots formed by the light beam are evenly distributed in the second direction. For example, refer to FIG. 16.

In this design manner, two-dimensional scanning of the scanning system in the first direction and the second direction can be implemented. In addition, there may be different high-resolution regions and low-resolution regions in the first direction, and resolutions of all regions in the second direction are the same.

In another possible design, the at least one control apparatus 22 may control the second scanning apparatus 26 to rotate at a non-constant speed. When the second scanning apparatus 26 rotates at a low speed, a scanning speed of the light beam in the second direction is correspondingly slowed down, and a resolution of a corresponding scanning location is improved, to form a high-resolution region (namely, an ROI) in the second direction (for ease of description, the ROI in the second direction is referred to as a second ROI in this specification), as shown in FIG. 17.

In this design manner, the scanning system can perform two-dimensional scanning in the first direction and the second direction, and there may be high-resolution regions (namely, the first ROI and the second ROI) in both the first direction and the second direction.

In a possible design, at least one rotation range may be set for the second scanning apparatus 26, and each rotation range corresponds to one rotation speed. If the at least one rotation range is a plurality of rotation ranges, different rotation ranges may correspond to different rotation speeds. The at least one control apparatus 22 may control the second scanning apparatus 26 to rotate within a rotation range of the at least one rotation range.

Two rotation ranges are used as an example.

When the second scanning apparatus 26 rotates within a first rotation range of the at least one rotation range, the at least one control apparatus 22 is further configured to control the second scanning apparatus 26 to rotate at a first rotation speed corresponding to the first rotation range.

When the second scanning apparatus 26 rotates within a second rotation range of the at least one rotation range, the at least one control apparatus 22 is further configured to control the second scanning apparatus 26 to rotate at a second rotation speed corresponding to the second rotation range.

The first rotation speed is different from the second rotation speed. Based on the first rotation speed, the scanning region corresponding to the light beam from the at least one light source 21 is a third region. Based on the second rotation speed, the scanning region corresponding to the light beam from the at least one light source 21 is a fourth region, and light spot energy distribution of the third region is different from light spot energy distribution of the fourth region.

It may be understood that the third region and the fourth region are final scanning regions (namely, regions where the emitted light beam incident to the field of view finally arrives), and specific locations of the third region and the fourth region are related to a scanning manner of the second scanning apparatus, and are further related to an optical system (for example, various possible reflectors, lenses, or other scanning apparatuses) before or after the second scanning apparatus 26. Correspondingly, a specific location of the second ROI in the second direction is related to a location of a low-speed rotation range in the at least one rotation range and a design of another optical element in the scanning system.

For example, the first rotation speed is less than the second rotation speed. In this case, light spot energy (or light density) of the light beam in the third region is higher than light spot energy (or light density) of the light beam in the fourth region. Correspondingly, a resolution of point cloud data obtained by the scanning system from the third region is higher than a resolution of point cloud data obtained by the scanning system from the fourth region. Therefore, the third region may be used as the second ROI, as shown in FIG. 18.

It may be understood that FIG. 18 merely shows scanning regions formed through rotation by the second scanning apparatus 26 at two different rotation speeds. Actually, the second scanning apparatus 26 may further have more different rotation speeds, and the formed scanning region may further have more types of light spot energy distribution. For example, a third rotation range may be further set, and corresponds to a third rotation speed. The third rotation speed is different from both the first rotation speed and the second rotation speed. Therefore, based on the third rotation speed, light spot energy distribution in a scanning region corresponding to the light beam from the at least one light source 21 is different from light spot energy distribution in the third region and the fourth region.

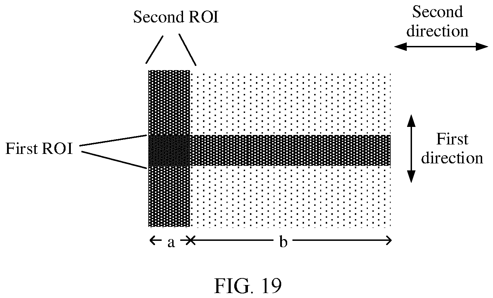

Further, the at least one control apparatus 22 may control the distribution location of the second ROI in the second direction by adjusting a correspondence between the rotation speed (or the rotation range) of the second scanning apparatus 26 and the scanning location of the light beam in the field of view region. For example, FIG. 17 and FIG. 18 show an example in which when the light beam scans a center region of the field of view in the second direction, the second scanning apparatus 26 rotates at a slow speed (for example, the first rotation speed). Therefore, the second ROI is distributed in the center region of the field of view in the second direction. FIG. 19 shows an example in which when the light beam scans a left edge region of the field of view, the second scanning apparatus 26 rotates at a slow speed (for example, the first rotation speed). Therefore, the second ROI is distributed in the left edge region of the field of view.

In this design manner, the scanning system can flexibly adjust the location of the high-resolution region (namely, the second ROI) in the second direction. With reference to the first scanning apparatus 23, two-dimensional location adjustment of the ROI of the scanning system can be implemented. In this way, when used in a driving scenario, a single lidar can adapt to a plurality of complex road conditions, and a vehicle does not need to be equipped with more lidars, which is friendly to an industrial design (Industrial Design, ID) of the vehicle.

In a possible design, a ratio of the second rotation speed to the first rotation speed is x, and 1<x≤1000. Optionally, the first rotation speed may be a minimum rotation speed of the second scanning apparatus 26, and the second rotation speed may be a maximum rotation speed of the second scanning apparatus 26.

In this way, it can be ensured that the high-resolution region in the second direction is obviously different from the low-resolution region in the second direction.

In a possible design, a proportion (namely, a proportion of a slow scanning region in all scanning regions) of the third region (namely, the second ROI) in the field of view region of the scanning system is γ, and 0.01≤γ<1. As shown in FIG. 19, γ is a ratio of a to b.

This can avoid a decrease in system scanning efficiency due to the second ROI occupying an excessively large proportion in an entire field of view region, and can further avoid a decrease in target recognition accuracy of the system due to the second ROI occupying an excessively small proportion in the entire field of view region.

In a possible design, a deviation between a center of the third region (namely, the second ROI) and a center of the field of view region of the scanning system is θ (that is, an angle at which a center point of the slow speed region deviates from the center of the field of view is θ), and 0≤θ≤90°.

This can avoid a case in which the system performs high-resolution scanning on an unnecessary region due to an excessively large location adjustment range of the second ROI, and can further avoid a case in which an applicable scenario of the solution is limited due to an excessively small adjustment range of the second ROI.

In a possible design, the second scanning apparatus 26 is a multi-facet rotation mirror, the multi-facet rotation mirror has F reflective surfaces, and F is a positive integer greater than 1. For example, a shape of the multi-facet rotation mirror may be a shape of a quadrangular prism (or a cube) shown in FIG. 15, where all four side faces may be used as reflective surfaces. Certainly, the shape of the multi-facet rotation mirror may alternatively be a triangular prism, a pentagonal prism, or the like. This is not limited in this application.

The multi-facet rotation mirror is configured to rotate around a rotation shaft. A rotation direction may be a clockwise direction, or may be a counter clockwise direction, or may be switched between a clockwise direction and a counter clockwise direction. This is not limited in this application.

When the multi-facet rotation mirror rotates within a rotation range of the at least one rotation range, the light beam from the at least one light source 21 is reflected by one of the F reflection surfaces.

Further, each reflective surface in the F reflective surfaces may correspond to at least one rotation range, and the rotation ranges corresponding to the reflective surfaces are the same. That is, in a process of reflecting the light beam by each reflective surface in the F reflective surfaces, the second scanning apparatus 26 may have a same speed change process. In other words, effect of reflecting the light beam on all reflective surfaces of the multi-facet rotation mirror may be the same. In a possible design, when the multi-facet rotation mirror rotates, duration of reflecting the light beam by each of the F reflective surfaces is exactly equal to duration of completing one time of scanning by the light beam in the field of view region in the second direction. In this way, complexity of back-end algorithm processing of the scanning system can be reduced.

Certainly, in actual application, different reflective surfaces of the F reflective surfaces may alternatively correspond to different rotation ranges. In other words, in a process of reflecting the light beam by different reflective surfaces in the F reflective surfaces, the second scanning apparatus 26 may alternatively have different speed change processes. In other words, effect of reflecting the light beam on all reflective surfaces of the multi-facet rotation mirror may be different. In this way, the scanning manner of the second scanning apparatus 26 is more flexible.

In a possible design, the rotation speed of the second scanning apparatus 26 is higher than the rotation speed of the first scanning apparatus 23. For example, the at least one control apparatus 22 is further configured to control the first scanning apparatus 23 to rotate once each time the second scanning apparatus 26 rotates by the at least one rotation range.

For example, the first direction is a longitudinal field of view direction, and the second direction is a transverse field of view direction. Each time the second scanning apparatus 26 rotates by the at least one rotation range, a corresponding light beam scans once from left to right (or from right to left) in the transverse field of view (for example, for a distance of the entire transverse FOV), and each time the first scanning apparatus 23 rotates once, a corresponding light beam moves from top to bottom (or bottom to top) in the longitudinal field of view by one row (that is, for a distance of a longitudinal angular resolution).

In another possible design, the rotation speed of the second scanning apparatus 26 is lower than the rotation speed of the first scanning apparatus 23. For example, the at least one control apparatus 22 is further configured to control the second scanning apparatus 26 to rotate by a preset angle each time the first scanning apparatus 23 swings by the swing angle range. The preset angle may be preset, or may be dynamically configured. In a specific design, the preset angle is equal to a transverse angular resolution of the scanning system. Due to existence of a process error, "equal to" herein may be understood as "equal to" within a specific error range.

For example, the first direction is a longitudinal field of view direction, and the second direction is a transverse field of view direction. Each time the first scanning apparatus 23 swings by the swing angle range, a corresponding light beam scans from top to bottom (or bottom to top) once in the longitudinal field of view (for example, for a distance of the entire longitudinal FOV), and each time the second scanning apparatus 26 rotates by the preset angle, a corresponding light beam moves from left to right (or right to left) in the transverse field of view by a column (that is, for a distance of a transverse angular resolution).

Certainly, in addition to the foregoing two design manners, the second scanning apparatus 26 and the first scanning apparatus 23 may further perform two-dimensional scanning on the field of view region in another cooperation manner. This is not limited in this application.

In a possible design, the at least one control apparatus 22 may adjust the scanning manner of the first scanning apparatus 23 and/or the second scanning apparatus 26 based on historical point cloud data obtained by the scanning system and/or information obtained by another sensor, so as to adjust a high-resolution region (namely, the ROI region, which may be specifically the first ROI, or the second ROI, an overall region formed by the first ROI and the second ROI, or an overlapping region of the first ROI and the second ROI, and is not limited herein). The another sensor includes, for example, but is not limited to, a camera and a millimeter-wave radar.

For example, the at least one control apparatus 22 is further configured to: control, based on the historical point cloud data obtained by the scanning system and/or the information obtained by the another sensor, the first scanning apparatus 23 to swing in the first swing manner in a first time period and/or control the second scanning apparatus 26 to rotate at the first rotation speed in a second time period.

In this way, the location of the ROI of the scanning system in the field of view can be flexibly and precisely adjusted.

In a possible design, the scanning system may include at least one transmitting optical system, and at least two transmitting optical paths in the scanning system share a same transmitting optical system.

FIG. 15 is used as an example. The scanning system includes three light sources 21, each light source 21 corresponds to one transmitting optical path, the three transmitting optical paths share a same transmitting optical system (including the beam splitter 24, the first scanning apparatus 23, the second scanning apparatus 26, and the like), and light beams corresponding to the three light sources 21 are incident to the field of view after being reflected by a same reflection surface or transmitted by a same transmission surface.

In this way, it can be ensured that light beams from different light sources 21 can overlap in the scanning region, thereby ensuring that the high-resolution region (namely, the first ROI) can be formed in the first direction. A high resolution and a high point rate can be achieved on the basis of a low scanning rate, thereby greatly reducing a specification requirement of the lidar system on a scanning device, and reducing design costs.

In a possible design, the scanning system further includes at least one receiving optical system, and at least two receiving optical paths in the system share a same receiving optical system.

FIG. 15 is used as an example. Three receiving optical paths share a same receiving optical system (including the second scanning apparatus 26, the first scanning apparatus 23, the beam splitter 24, and the like), and light beams on the three receiving optical paths are received by the receiver 25 after being reflected by a same reflection surface or transmitted by a same transmission surface.

In this way, it can be ensured that a light beam returned to the scanning system from the field of view can be fully received by the receiver 25, so as to ensure that the system can obtain a large amount of point cloud data.

In a possible design, the at least one transmitting optical system and the at least one receiving optical system are in an architecture of a same axis. For example, as shown in FIG. 15, that is, the transmitting optical path and the receiving optical path share a same surface of a same scanning component (for example, the first scanning apparatus 23 and the second scanning apparatus 26).

In another possible design, the at least one transmitting optical system and the at least one receiving optical system are in an architecture of different axes, that is, the transmitting optical path and the receiving optical path may use different scanning components or different surfaces of a same scanning component.

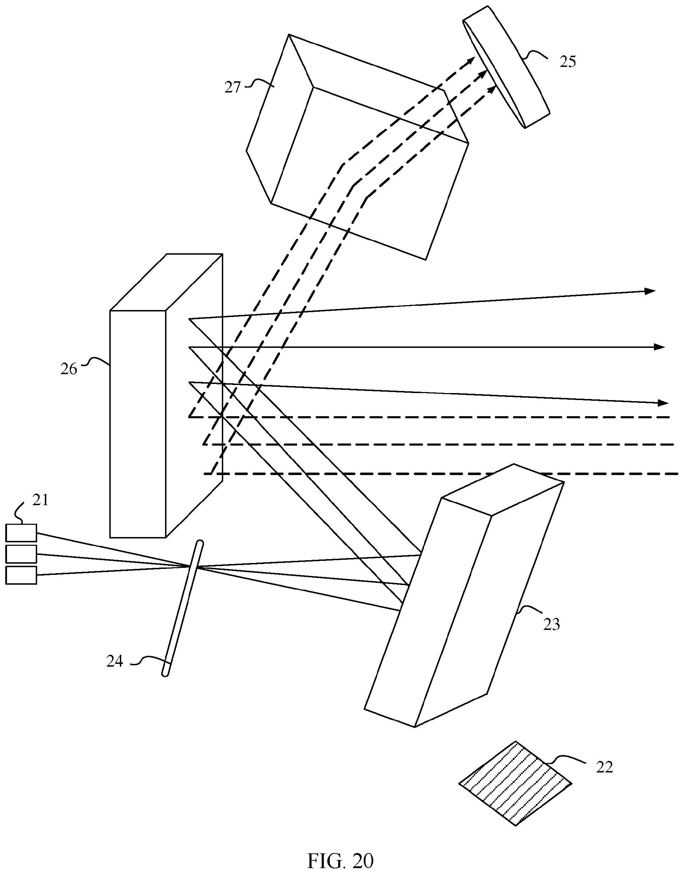

For example, when the transmitting optical path and the receiving optical path may use different scanning components, a scanning apparatus further needs to be set for the scanning system, for example, a third scanning apparatus 27 shown in FIG. 20 (a type of the third scanning apparatus 27 is the same as a type of the first scanning apparatus 23, for example, both are one-dimensional galvanometers). The at least one control apparatus 22 is further configured to control the third scanning apparatus 27 to swing synchronously with the first scanning apparatus 23, so that the third scanning apparatus 27 can reflect the light beam returned from the field of view, and the reflected light beam is received by the receiver 25. It may be understood that FIG. 20 is merely an example. This is not limited thereto in practice.

It should be understood that the foregoing design manners may be combined with each other to implement different technical effect.

It may be understood that shapes and sizes of the components in the foregoing accompanying drawings do not reflect real proportions, and are merely intended to illustrate content of this application.

In addition, the foregoing descriptions are merely some embodiments of this application, and a person of ordinary skill in the art may still derive other drawings from the foregoing accompanying drawings without creative efforts.

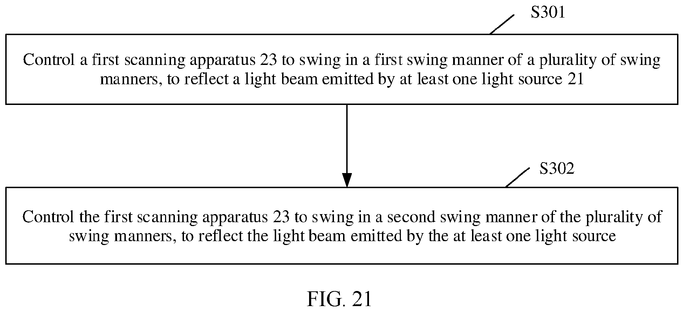

Based on a same technical concept, as shown in FIG. 21, an embodiment of this application further provides a scanning method. The method may be performed by the at least one control apparatus 22 in the foregoing scanning system. The method includes the following steps.

S301: Control a first scanning apparatus 23 to swing in a first swing manner of a plurality of swing manners, to reflect a light beam emitted by at least one light source 21.

S302: Control the first scanning apparatus 23 to swing in a second swing manner of the plurality of swing manners, to reflect the light beam emitted by the at least one light source.

In the plurality of swing manners, one or more of swing start locations, swing center points, or swing angle ranges of different swing manners are different.

In this way, a distribution location of an ROI in a first direction can be flexibly adjusted.

Optionally, the method may further includes: controlling a second scanning apparatus 26 to rotate within a rotation range, to reflect the light beam emitted by the at least one light source 21.

For example, when the second scanning apparatus 26 rotates within a first rotation range of the at least one rotation range, the second scanning apparatus 26 is controlled to rotate at a first rotation speed corresponding to the first rotation range; and when the second scanning apparatus 26 rotates within a second rotation range of the at least one rotation range, the second scanning apparatus 26 is controlled to rotate at a second rotation speed corresponding to the second rotation range, where the first rotation speed is different from the second rotation speed.

In this way, a distribution location of an ROI in a second direction can be flexibly adjusted.

It should be understood that all related content in the foregoing apparatus (or system) embodiments may be cited in descriptions of the corresponding method steps. Details are not described herein again.

Based on a same technical concept, an embodiment of this application further provides a processing apparatus, including at least one processor and an interface circuit. The interface circuit is configured to: receive a signal from another apparatus different from the apparatus and transmit the signal to the processor, or send a signal from the processor to another apparatus different from the apparatus. The processor is configured to implement, by using a logic circuit or executing code instructions, the foregoing method performed by the at least one control apparatus 22.

Based on a same technical concept, an embodiment of this application further provides a terminal, including the foregoing scanning system. The terminal may be used in an intelligent transportation device (for example, a car, a ship, an uncrewed aerial vehicle, a train, a wagon, or a truck), a smart home device (for example, a television or a robotic vacuum cleaner), an intelligent manufacturing device (for example, a robot, an industrial device, or an intelligent logistics device), or the like.

Based on a same technical concept, an embodiment of this application further provides a vehicle, including the foregoing scanning system.

Based on a same technical concept, an embodiment of this application further provides a computer-readable storage medium. The storage medium stores a computer program or instructions. When the computer program or the instructions are executed by a communication apparatus, the method performed by the at least one control apparatus 22 is implemented.

Based on a same technical concept, an embodiment of this application further provides a computer program product. When the computer program product runs on a processor, the method performed by the at least one control apparatus 22 is implemented.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of the process and/or the block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, and computer-implemented processing is generated. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. A scanning system, comprising:
at least one light source, configured to emit a light beam;
a first scanning apparatus, configured to reflect the light beam emitted by the at least one light source; and
at least one control apparatus, configured to control the first scanning apparatus to swing within a swing angle range.

2. The system according to claim 1, wherein the at least one control apparatus is further configured to control the first scanning apparatus to swing in a first swing manner of a plurality of swing manners, wherein in the plurality of swing manners, one or more of swing start locations, swing center points, or swing angle ranges of different swing manners are different.

3. The system according to claim 2, wherein the at least one light source is a plurality of light sources; and an included angle between a light beam emitted by a first light source of the at least one light source to a field of view region of the scanning system and a light beam emitted by a second light source of the at least one light source to the field of view region of the scanning system is α, wherein α>0.

4. The system according to claim 2, wherein
when controlling the first scanning apparatus to swing in the first swing manner, the at least one control apparatus is specifically configured to control the first scanning apparatus to rotate N times from a first angle to a second angle, wherein N is a positive integer, the first scanning apparatus rotates by an angle of β each time, and β>0; and
α>β.

5. The system according to any one of claims 2 to 4, wherein in the first swing manner, a scanning region corresponding to the light beam from the at least one light source is a first region.

6. The system according to claim 5, wherein the plurality of swing manners further comprise a second swing manner; and in the second swing manner, the scanning region corresponding to the light beam from the at least one light source is a second region, and light spot energy distribution corresponding to the first region is different from light spot energy distribution corresponding to the second region.

7. The system according to claim 6, wherein the at least one light source is a plurality of light sources; and
the at least one control apparatus is further configured to: when controlling the first scanning apparatus to swing in the second swing manner, turn off some light sources in the plurality of light sources.

8. The system according to claim 6 or 7, wherein a swing angle range corresponding to the first swing manner is different from a swing angle range corresponding to the second swing manner, and a difference between the swing angle range corresponding to the first swing manner and the swing angle range corresponding to the second swing manner is less than or equal to 90 degrees.

9. The system according to any one of claims 6 to 8, wherein the at least one control apparatus is further configured to:
control the first scanning apparatus to swing periodically in the first swing manner; and
after the first scanning apparatus swings in the first swing manner for at least one periodicity, control the first scanning apparatus to switch to swing in the second swing manner.

10. The system according to any one of claims 1 to 9, wherein the first scanning apparatus is a one-dimensional galvanometer.

11. The system according to any one of claims 1 to 10, wherein the scanning system further comprises:
a second scanning apparatus, configured to reflect the light beam emitted by the at least one light source, wherein
the at least one control apparatus is further configured to control the second scanning apparatus to rotate within a rotation range.

12. The system according to claim 11, wherein the first scanning apparatus swings in a first direction, and the second scanning apparatus rotates in a second direction, wherein the second direction is perpendicular to the first direction.

13. The system according to claim 12, wherein the first direction is a transverse field of view direction, and the second direction is a longitudinal field of view direction; or the second direction is a transverse field of view direction, and the first direction is a longitudinal field of view direction.

14. The system according to any one of claims 11 to 13, wherein the at least one control apparatus is further configured to control the second scanning apparatus to rotate within a rotation range of at least one rotation range; and
when the second scanning apparatus rotates within a first rotation range of the at least one rotation range, the at least one control apparatus is further configured to control the second scanning apparatus to rotate at a first rotation speed corresponding to the first rotation range.

15. The system according to claim 14, wherein based on the first rotation speed, the scanning region corresponding to the light beam from the at least one light source is a third region.

16. The system according to claim 14 or 15, wherein when the second scanning apparatus rotates within a second rotation range of the at least one rotation range, the at least one control apparatus is further configured to control the second scanning apparatus to rotate at a second rotation speed corresponding to the second rotation range; and the first rotation speed is different from the second rotation speed.

17. The system according to claim 16, wherein based on the second rotation speed, the scanning region corresponding to the light beam from the at least one light source is a fourth region, and light spot energy distribution of the third region is different from light spot energy distribution of the fourth region.

18. The system according to claim 16 or 17, wherein a ratio of the second rotation speed to the first rotation speed is x, and 1<x≤1000.

19. The system according to any one of claims 15 to 18, wherein a proportion of the third region in the field of view region of the scanning system is γ, and 0.01≤γ<1.

20. The system according to any one of claims 15 to 19, wherein a deviation between a center of the third region and a center of the field of view region of the scanning system is θ, and 0≤θ≤90°.

21. The system according to any one of claims 14 to 20, wherein the second scanning apparatus is a multi-facet rotation mirror, the multi-facet rotation mirror has F reflective surfaces, and F is a positive integer greater than 1; the multi-facet rotation mirror is configured to rotate around a rotation shaft; and when the multi-facet rotation mirror rotates within a rotation range of the at least one rotation range, the light beam from the at least one light source is reflected by one of the F reflective surfaces.

22. The system according to any one of claims 14 to 21, wherein the at least one control apparatus is further configured to:
control the first scanning apparatus to rotate once each time the second scanning apparatus rotates by the at least one rotation range; or
control the second scanning apparatus to rotate by a preset angle each time the first scanning apparatus swings by the swing angle range, wherein the preset angle is equal to a transverse angular resolution of the scanning system.

23. The system according to any one of claims 14 to 22, wherein the at least one control apparatus is further configured to:
based on historical point cloud data obtained by the scanning system and/or information obtained by another sensor, control the first scanning apparatus to swing in the first swing manner in a first time period and/or control the second scanning apparatus to rotate at the first rotation speed in a second time period.

24. The system according to any one of claims 1 to 23, wherein the system comprises at least one transmitting optical system, and at least two transmitting optical paths in the system share a same transmitting optical system; and
the system further comprises at least one receiving optical system, and at least two receiving optical paths in the system share a same receiving optical system.

25. The system according to claim 24, wherein
the at least one transmitting optical system and the at least one receiving optical system are in an architecture of a same axis; or
the at least one transmitting optical system and the at least one receiving optical system are in an architecture of different axes; and the system further comprises a third scanning apparatus, wherein the third scanning apparatus is synchronized with the first scanning apparatus, and the third scanning apparatus is configured to reflect a light beam returned from the field of view.

26. A scanning method, comprising:
controlling a first scanning apparatus to swing in a first swing manner of a plurality of swing manners, to reflect a light beam emitted by at least one light source; and
controlling the first scanning apparatus to swing in a second swing manner of the plurality of swing manners, to reflect the light beam emitted by the at least one light source, wherein
in the plurality of swing manners, one or more of swing start locations, swing center points, or swing angle ranges of different swing manners are different.

27. The method according to claim 26, wherein the method further comprises:
controlling a second scanning apparatus to rotate within a rotation range, to reflect the light beam emitted by the at least one light source.

28. The method according to claim 27, wherein the controlling a second scanning apparatus to rotate within a rotation range comprises:
when the second scanning apparatus rotates within a first rotation range of at least one rotation range, controlling the second scanning apparatus to rotate at a first rotation speed corresponding to the first rotation range; and
when the second scanning apparatus rotates within a second rotation range of the at least one rotation range, controlling the second scanning apparatus to rotate at a second rotation speed corresponding to the second rotation range, wherein
the first rotation speed is different from the second rotation speed.

29. A processing apparatus, comprising at least one processor and an interface circuit, wherein
the interface circuit is configured to: receive a signal from another apparatus different from the apparatus and transmit the signal to the processor, or send a signal from the processor to another apparatus different from the apparatus, and the processor is configured to implement the method according to any one of claims 26 to 28 by using a logic circuit or executing code instructions.

30. A computer-readable storage medium, wherein the computer-readable storage medium is configured to store instructions, and when the instructions are executed, the method according to any one of claims 26 to 28 is implemented.

31. A computer program product, wherein the computer program product stores instructions, and when the computer program product runs on a computer, the computer is enabled to perform the method according to any one of claims 26 to 28.

32. A terminal device, comprising the system according to any one of claims 1 to 25.
